(19) Europäisches Patentamt
European Patent Office
Office européen des brevets

(11) **EP 2 487 893 B1**

(12) **EUROPEAN PATENT SPECIFICATION**

(45) Date of publication and mention
of the grant of the patent:
**25.05.2016 Bulletin 2016/21**

(51) Int Cl.:
***H04N 1/60*** *(2006.01)*

(21) Application number: **12155242.6**

(22) Date of filing: **13.02.2012**

(54) **Image processing apparatus, image processing method, and image processing program**

Bildverarbeitungsvorrichtung, Bildverarbeitungsverfahren und Bildverarbeitungsprogramm

Appareil de traitement d'images, procédé de traitement d'images et programme de traitement d'images

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.02.2011 JP 2011029141**

(43) Date of publication of application:
**15.08.2012 Bulletin 2012/33**

(73) Proprietor: **Ricoh Company, Ltd.**
**Tokyo 143-8555 (JP)**

(72) Inventor: **Shibuya, Takeshi**
**Ohta-ku, Tokyo 143-8555 (JP)**

(74) Representative: **Maury, Richard Philip**
**Marks & Clerk LLP**
**90 Long Acre**
**London WC2E 9RA (GB)**

(56) References cited:
**EP-A1- 2 247 092       US-A1- 2002 085 235**
**US-A1- 2005 088 710    US-A1- 2007 008 594**
**US-A1- 2008 291 498**

**Description**

BACKGROUND OF THE INVENTION

1. Field of the Invention

The present invention relates to an image processing apparatus, an image processing method, and an image processing program for performing image processing to achieve uniformity of reproduced colors in an image forming apparatus that forms color images on an image formation medium by superimposing a plurality of basic colors on each other.

2. Description of the Related Art

For an image forming apparatus, such as a color printer, a color copier, or a color printing machine, that forms color images on an image formation medium based on digital data for basic colors such as CMYK, image processing called color management is performed on input data to achieve the uniformity of reproduced colors. As the color management, the color management framework proposed by International Color Consortium (ICC) and ICC profile being its data format are widely known.

As is the case with the ICC profile, in many of color managements of printing system with high nonlinearity, the basic unit of conversion is formed by combining a multidimensional look up table (LUT) for associating an input color space with an output color space and a one-dimensional LUT for each channel of the colors such as CMYK for linearizing these input and output. The one-dimensional LUT of an input/output channel is called TRC, which means tone reproduction curve or tone response correction. The TRC does not always need to be implemented in the LUT, however, it is, in many cases, implemented as LUT because of its ease of implementation and its versatility.

The ICC framework provides, for the color conversion, a method of providing an interface for a device-independent color space called profile connection space (PCS) and a method (called a device link) of performing direct mapping, not through the PCS, using the TRC of the input/output channel and the multidimensional LUT. In the ICC, a color space of a CIE1976Lab color system or of a CIE1931XYZ color system, or its subspace is used as a PCS. In the following explanation, not only data for ICC but also data for storing the TRC of the input/output channel and the multidimensional LUT used to perform color conversion between the channels is called a color profile, or simply called a profile (according to the definition of the present specifications, the ICC profile format is a package of a plurality of profiles in accordance with rendering intents and conversion directions).

In the above color management framework, an image forming apparatus that supports a plurality of types of printing papers or a plurality of types of media (image formation media) similar thereto needs a different color profile for each medium with different color reproduction characteristics. Furthermore, even the same type of media requires profiles that are adjusted for printing conditions such as the number of halftone dot lines, the type of contents such as text, graphics, and photos, or color-gamut compression intent. Therefore, the required number of profiles tends to increase in order to meet requirements of customers who want to deal with variety of media. Therefore, it is difficult for manufacturers providing image forming apparatuses to provide profiles that match all the media and output conditions, in terms of cost and management. Consequently, the manufacturers provide only profiles for some typical media and output conditions, and leaves the creation of any profiles other than the profiles to the user itself.

However, for the creation of profiles, although it is comparatively easy to construct a color reproduction model that is the mapping from a device color space to a PCS, the mapping in the opposite direction from a PCS to a device color space (CMYK space parameters in many image forming apparatuses) has a technical difficulty such that any unpredicted defect may easily occur in the constructed mapping because the mapping includes an unstable process of associating any color outside a color gamut unreproducible by the device with any color within a reproducible color gamut. Such a mapping defect is likely to occur in such an adjustment that "favorability" in particular is added to reproduced colors, and this is a factor requiring a certain amount of experience.

Conventional technology described in, for example, Japanese Patent Application Laid-open No. 2008-153810 is proposed to solve the problem of the increasing number of profiles corresponding to a variety of media as explained above. Japanese Patent Application Laid-open No. 2008-153810 discloses the idea that paper, approximating a user's paper sheet that is used by the user to output an image thereon and being an image formation medium with unknown color reproduction characteristics, is selected from among a plurality of preset standard papers being image formation media with known color reproduction characteristics, and that conversion data of the image data are combined based on the color reproduction characteristics of the selected paper.

However, the technology disclosed in Japanese Patent Application Laid-open No. 2008-153810 is a technology of generating conversion data for a device-link type RGB to CMYK conversion for a user's paper sheet. The conversion data is generated by a combination of RGB to CMYK conversion for a standard paper, CMYK to PCS conversion for the same standard paper, and PCS to CMYK conversion for a user's paper sheet. Therefore, it is essential for the combination to separately obtain a profile for the user's paper sheet, especially, PCS to CMYK conversion for which the generation requires experience, and thus the user's difficulty in constructing profiles remains essentially unsolved.

Japanese Patent Application Laid-open No. 2008-153810 indicates, as a specific method of selecting a standard paper approximating a user's paper sheet, three types of methods: (a) being specified by the user, (b) being determined from process parameters such as fixing parameters, and (c) being determined from a profile generated based on the user's paper sheet.

However, the method of (a) has a problem that a standard paper approximating the user's paper sheet cannot be selected when the user himself/herself does not know which paper, among a plurality of preset standard papers, is close to the user's paper sheet.

The method of (b) has a problem that because the process parameters are only determined generally as physically printable conditions (such as conditions with which transfer and fixing can be normally performed and a paper jam is prevented from its occurrence), classification performance enough to be used for classification on color reproduction characteristics is unlikely to be obtained.

In the method of (c), because color reproduction characteristics between the standard papers and the user's paper sheet can be directly compared with each other, it is possible to determine a desired paper type from a view point of color reproduction. However, to select a standard paper approximating the user's paper sheet using the method of (c), profiles for determination are required before the determination, and therefore there is a problem that the difficulty in creation of the profile cannot be avoided. In addition, because the paper type cannot be determined until the profiles are created, the necessity of creation of the profiles itself cannot be determined before the creation thereof. Therefore, such a burden that even the profiles being not originally needed for the creation have to be created is placed on the user. Furthermore, to select existing profiles of standard papers close to the user's paper sheet, correlation calculations with all the existing profiles are necessary, and therefore there is a problem that a processing load (processing time) for selection calculations becomes too heavy when the number of profiles of the standard papers to be registered becomes enormous.

Japanese Patent Application Laid-open No. 2002-84433 discloses a method in which a paper type detector is provided on the side of an image output terminal; a detected paper type is transmitted to a host personal computer (PC); the host PC selects a reference-color conversion table from a reference-color-conversion-table storing unit according to the paper type, further generates an applied-color conversion table from the reference-color conversion table, and converts image data using the applied-color conversion table.

This case has such advantages that because the paper type can be determined before a drawing process of the image output terminal, paper determination information can be used for subsequent determination of generation of the applied-color conversion table. However, the paper type detector disclosed in Japanese Patent Application Laid-open No. 2002-84433 is a determination method based on a reflected light from the paper and a transmitted light therethrough, and because it is not a spectral-wavelength-based multidimensional determination method, there occurs a problem that paper types with different color reproduction characteristics cannot be adequately determined.

There is a need to provide an image processing apparatus, an image processing method, and an image processing program capable of simply and appropriately impletnenting color management for image formation media with unknown color reproduction characteristics.

The invention is the apparatus, method and program product of Claims 1, 3 and 4.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

Fig. 1 is a configuration diagram of an image forming system provided with a color image forming apparatus;
Fig. 2 is a configuration diagram of an overview of the image forming apparatus;
Fig. 3 is a functional block diagram of an overview of an image processing process in a color image processing apparatus;
Fig. 4 is a diagram of one example of a paper registration list used by a profile managing unit of the color image processing apparatus;
Fig. 5 is a diagram of one example of a color-management setting screen displayed as a user interface on a console of the color image processing apparatus;
Fig. 6 is a diagram of one example of a paper-profile setting screen displayed when a new/edit menu is selected in the color-management setting screen of Fig. 5;

Fig. 7 is a flowchart of a color management setting process executed by the profile managing unit according to a user operation using the color-management setting screen of Fig. 5;

Fig. 8 is a flowchart of details of a paper estimation process at Step S103 of Fig. 7;

Fig. 9 is a diagram of an average spectral reflectance experimentally obtained from a typical paper sample group;

Fig. 10 is a diagram of main component vectors of the paper sample group of Fig. 9;

Fig. 11 is a diagram of a score distribution of a first main component and a second main component of a paper included in the paper sample group of Fig. 9;

Fig. 12 is a flowchart of details of a calibration process at Step S109 of Fig. 7; and

Fig. 13 is a conceptual diagram for explaining a method of generating a paper correction TRC for minimizing an error evaluation value with paper characteristics for a paper profile,

## DETAILED DESCRIPTION OF THE PREFERRED EMBODIMENTS

Exemplary embodiments of an image processing apparatus, an image processing method, and an image processing program according to the present invention will be explained in detail below with reference to the accompanying drawings.

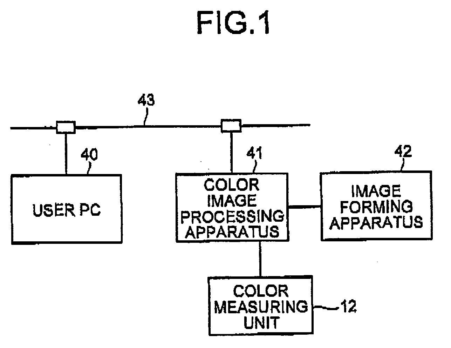

Fig. 1 is a configuration diagram of an image forming system provided with a color image processing apparatus according to a present embodiment. A color image processing apparatus 41 according to the present embodiment is implemented by a control PC and also by expansion hardware and control software which are built in the control PC.

Connected to the color image processing apparatus 41 is an image forming apparatus 42 that forms an image on a paper sheet being a physical image formation medium based on image data processed by the color image processing apparatus 41. The image forming apparatus 42 has four basic color materials: cyan (C), magenta (M), yellow (Y), and black (K), and forms a full color image on the paper sheet in a mixture of these colors.

Meanwhile, the color image processing apparatus 41 is connected to a network 43, and receives image data (original data) sent from a user PC 40 also connected to the network 43, subjects the image data to image processing processes explained later, and then transfers the processed image data to the image forming apparatus 42.

Connected also to the color image processing apparatus 41 is a color measuring unit 12 used for calibration and measurement of color reproduction characteristics for the image forming apparatus 42. A spectral colorimetric device is used as the color measuring unit 12, however, a tristimulus-value direct-reading color measuring device can be substituted in a simpler configuration.

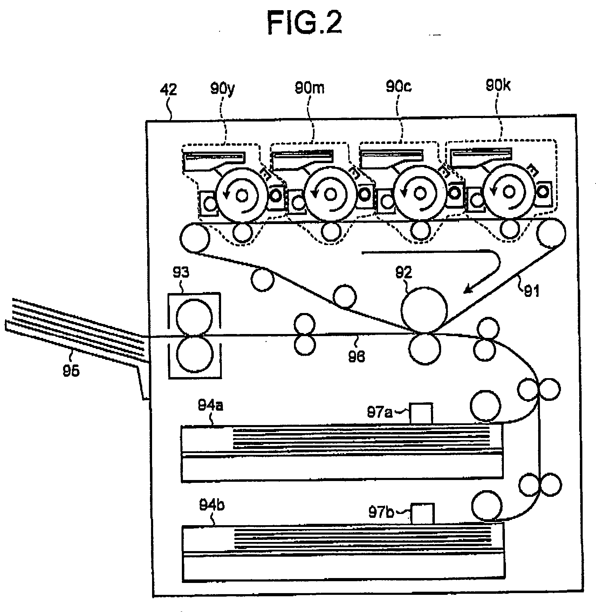

Fig. 2 is a configuration diagram of an overview of the image forming apparatus 42. The image forming apparatus 42 includes imaging units 90c, 90m, 90y, and 90k corresponding to the four colors of cyan (C), magenta (M), yellow (Y), and black (K), respectively. The imaging unite 90c, 90m, 90y, and 90k form toner images of the colors: cyan (C), magenta (M), yellow (Y), and black (K), respectively, based on the image data transmitted from the color image processing apparatus 41. The toner images formed by the imaging units 90c, 90m, 90y, and 90k are superimposed on each other on an intermediate transfer belt 91 rotating in an arrow-indicated direction of Fig. 2, and color toner images are thereby formed on the intermediate transfer belt 91.

Meanwhile, paper sheets being a printing target are stacked in paper feed stackers (medium containers) 94a and 94b, are picked up one by one from one of the paper feed stackers selected by the color image processing apparatus 41, and the picked up paper sheet is conveyed along a paper conveying path 96. The toner images formed on the intermediate transfer belt 91 are transferred, when reaching the position of the transfer roller unit 92, to the paper sheet conveyed along the paper conveying path 96 by a transfer roller unit 92, and are then heated and fixed by a fixing device 93. The paper sheet on which fixing of the toner images are completed is ejected to a paper ejection stacker 95.

The paper feed stackers 94a and 94b for stacking paper sheets are provided with spectral colorimetric devices (medium sensors) 97a and 97b; respectively. The spectral colorimetric devices 97a and 97b are configured to perform colorimetry on the surface of the topmost paper sheet stacked in the paper feed stackers 94a and 94b by a request from the color image processing apparatus 41 to detect a spectral reflectance (spectral reflectance characteristics) and to return the detected value to the color image processing apparatus 41.

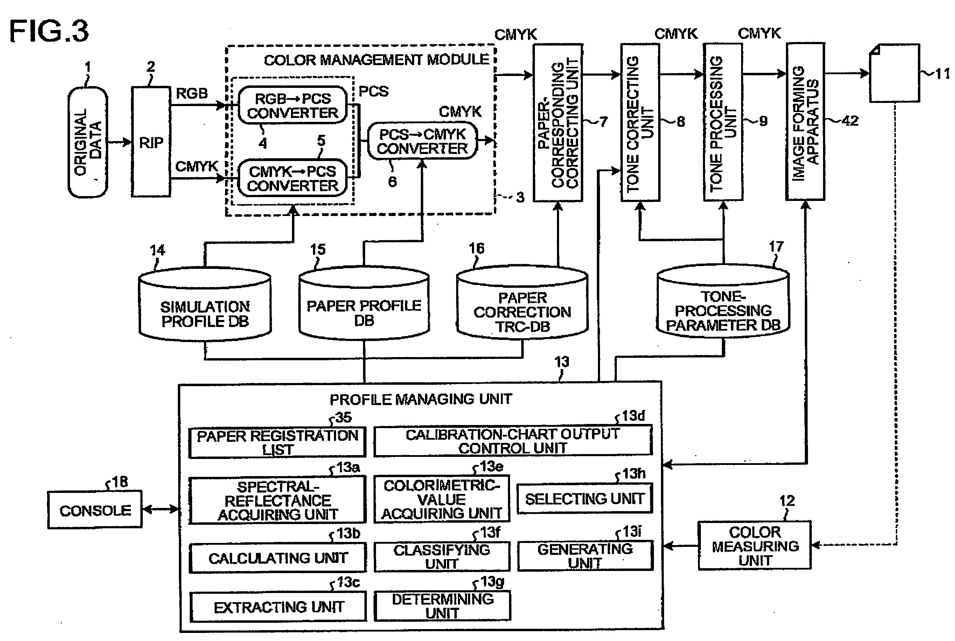

Fig. 3 is a functional block diagram of an overview of an image processing process in the color image processing apparatus 41. The overview of the image processing process in the color image processing apparatus 41 will be explained below with referring to Fig. 3.

Original data 1 being to be input to the image forming apparatus 42 is firstly developed into a bitmap, by a raster image processor (RIP) 2, in which attribute information is added to a color signal for each pixel of RGB or CMYK. The attribute information corresponds to, for example, information informing that the pixel has belonged to either one of objects such as a character, photo, and graphic. Most of the process parameters in the RIP 2 and subsequent devices are switched depending on the attribute information. Because the processes are performed pixel by pixel, the portion related to object switching is omitted in Fig. 3 to simplify the explanation. However, for software implementation, the processes from a color management module 3 to a tone processing unit 9 may be branched. For hardware implementation, the processes from the color management module 3 to the tone processing unit 9, which have different settings, are executed in parallel and signals are selected at a gate of the image forming apparatus 42 according to the attribute information, so that switching for each object is implemented.

In the color management module 3, values of device-dependent color space such as RGB and CMYK are converted to values of CMYK color space being the basic colors of the image forming apparatus 42 through the PCS being the device-independent color space. As the PCS, CIE1976Lab, CIE1931XYZ, or subspace of these color systems is generally used. In the present embodiment, as the PCS, media relative Lab values using the paper white color as white reference are assumed, however, the device-independent color space to be implemented is not necessarily limited thereto.

The color management module 3 is mainly formed with conversion elements such as an RGB to PCS converter 4 that converts RGB signals to PCS signals, a CMYK to PCS converter 5 that converts CMYK signals to PCS signals, and a PCS to CMYK converter 6 that converts PCS signals to CMYK signals. The color profiles being color conversion parameters required for conversion are set in the conversion elements before the processes are performed. These color profiles are stored in the following databases (DB) related to the respective conversion elements.

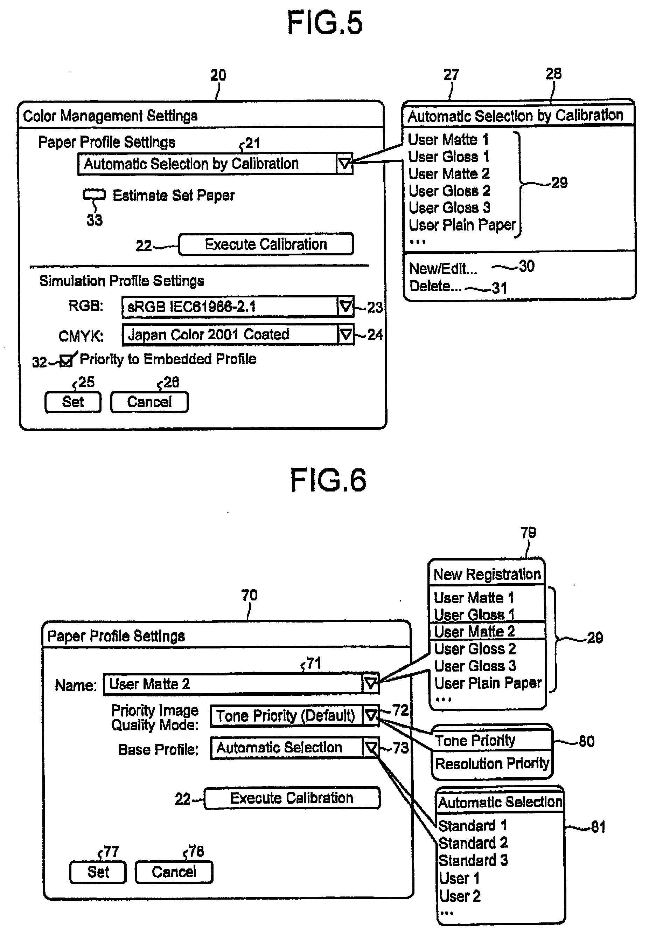

A simulation profile DB 14 stores therein color Conversion parameters (hereinafter, "simulation profile") for the RGB to PCS converter 4 and the CMYK to PCS converter 5. Before the processes performed in the RGB to PCS converter 4 and the CMYK to PCS converter 5, simulation profiles for the RGB to PCS converter 4 and the CMYK to PCS converter 5 are respectively read from the simulation profile DB 14 according to the setting of user interface (explained later) displayed on a console 18, and the read simulation profiles are set therein, respectively. However, if the profiles are initially embedded in the original data 1, the embedded profiles are used according to the setting (if a check box 32 in Fig. 5 is ON) of the user interface displayed on the console 18.

A paper profile DB 15 stores therein color conversion parameters (hereinafter, "paper profile") for the PCS to CMYK converter 6. Before the processes performed in the PCS to CMYK converter 6, a paper profile selected from the paper profile DB 15 is set in the PCS to CMYK converter 6, according to the setting through the user interface displayed on the console 18 or according to automatic determination by calibration explained later. The PCS to CMYK converter 6 thereby converts the Lab values on the PCS to CMYK values so as to substantially match reproduced colors in the Lab reproduced as an output image 11 according to the processes in a paper-corresponding correcting unit 7 and subsequent units.

The paper-corresponding correcting unit 7 and a tone correcting unit 8 correct tone characteristics using one-dimensional LUT (TRC) provided in each channel of the C, M, Y, and K colors, respectively. The TRC used in the paper-corresponding correcting unit 7 is a tone correction parameter (hereinafter, "paper correction TRC") used to reduce a difference between color reproduction characteristics for each paper sheet supported by the image forming apparatus 42, and is registered in a paper correction TRC-DB 16. The TRC used in the tone correcting unit 8 is a tone correction parameter (hereinafter, "tone correction data") used to accommodate a difference between tone processing characteristics set in the tone processing unit 9, and is registered in a tone-processing parameter DB 17 in association with a tone processing parameter set in the tone processing unit 9.

The tone processing unit 9 converts an output value of 8 bits per color of the tone correcting unit 8 into input data of 2 bits per pixel of the image forming apparatus 42 by grouping a plurality of pixels into pairs to form halftone dots (area modulation).

The tone-processing parameter DB 17 keeps a pair of the tone processing parameter for each color set in the tone processing unit 9 and the tone correction data set in the tone correcting unit 8 in combination therewith. Before the processes in the tone processing unit 9 and the tone correcting unit 8, the pair of the tone processing parameter and the tone correction data is read from the tone-processing parameter DB 17 according to the setting of the user interface displayed on the console 18, and the tone processing parameter is set in the tone processing unit 9 and the tone correction data is set in the tone correcting unit 8.

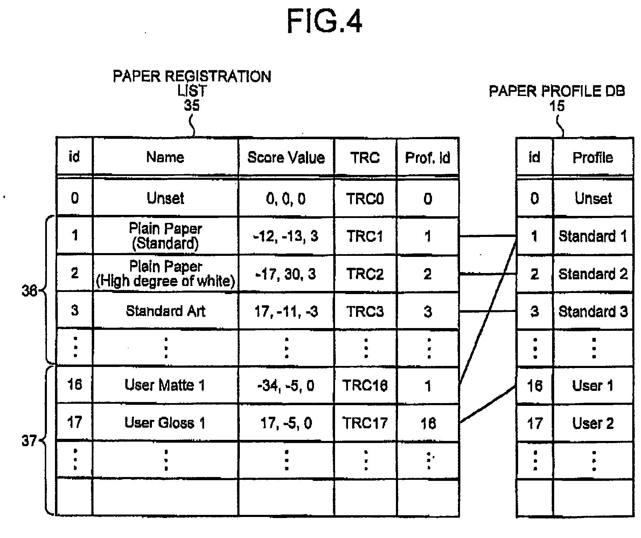

A profile managing unit 13 performs management and settings of the profiles and TRC stored in each of the databases according to the setting of the user interface displayed on the console 18. In particular, the profile managing unit 13 has a function so as to enable simple implementation of color management by using a paper registration list 35 as illustrated in Fig. 4. Specifically, the profile managing unit 13 includes a spectral-reflectance acquiring unit 13a, a calculating unit 13b, and an extracting unit 13c as functional components that operate when a set-paper estimation button 33 is pressed on a color-management setting screen 20 (see Fig. 5), explained later, displayed as the user interface on the console 18. The profile managing unit 13 also includes a calibration-chart output control unit 13d, a colorimetric-value acquiring unit 13e, a classifying unit 13f, a determining unit 13g, a selecting unit 13h, and a generating unit 13i as functional components that operate when a calibration execution button 22 is pressed on the color-management setting screen explained later.

As illustrated in Fig. 4, the paper registration list 35 describes a score value being a feature amount reflecting color reproduction characteristics of an already registered paper, an entry (Prof. id) of the paper profile DB 15, and an entry (TRC) of the paper correction TRC-DB 16 in association with one another for each paper. The paper registration list 35 is provided with a standard registration area 36 and a user registration area 37. The information for previously registered standard paper is stored in the standard registration area 36, and the information for user's paper sheet (a paper sheet arbitrarily used by the user) obtained through calibration, explained later, is stored in the user registration area 37. The score value is a value calculated based on a spectral reflectance of a paper sheet as explained later.

Previously registered in an entry of the paper profile DB 15 is a paper profile corresponding to reference paper (which is a standard paper whose information is stored in the standard registration area 36 in the paper registration list 35 of Fig. 4) that represents a paper group supported by the image forming apparatus 42. Such a paper group is roughly classified into gloss paper, matte paper, and plain paper, however, practically, these classifications and the color reproduction characteristics do not always match each other, and therefore the classifications are implemented based on actual color reproduction characteristics of each paper sheet. Moreover, when a paper profile corresponding to a user's paper sheet is generated through calibration performed on the user's paper sheet, the paper profile corresponding to the user's paper sheet is also registered in the entry of the paper profile DB 15.

The spectral-reflectance acquiring unit 13a requests the spectral colorimetric device 97a or 97b provided in the image forming apparatus 42, when the set-paper estimation button 33 is pressed on the color-management setting screen 20 explained later, to detect a spectral reflectance of the paper sheet (which may be called "medium used") stacked in the paper feed stacker 94a or 94b, and acquires the spectral reflectance of the paper sheet detected by the spectral colorimetric device 97a or 97b. The case where the set-paper estimation button 33 is pressed on the color-management setting screen 20 is a case where the user's paper sheet with unknown color reproduction characteristics is used as an image formation medium. Therefore, the spectral-reflectance acquiring unit 13a acquires the spectral reflectance of the user's paper sheet (medium used) with unknown color reproduction characteristics detected by the spectral colorimetric device 97a or 97b. In consideration of a case where the user's paper sheets are stacked in only either one of the paper feed stackers 94a and 94b, it is configured so that the user can select, for example, a paper feed stacker to be used through another user interface provided separately from the color-management setting screen 20, and the spectral-reflectance acquiring unit 13a desirably acquires a detected value from the spectral colorimetric device corresponding to the selected paper feed stacker.

The calculating unit 13b calculates feature amounts reflecting the color reproduction characteristics of the user's paper sheet, specifically, calculates score values (s1, s2, s3) representing scores of main components up to a third main component of the user's paper sheet, based on the spectral reflectance of the user's paper sheet acquired by the spectral-reflectance acquiring unit 13a. It should be noted that the method of calculating a main component score is a widely known technology, and therefore detailed explanation is omitted herein.

The extracting unit 13c compares the score values of the user's paper sheet calculated by the calculating unit 13b and the score values of the paper which is already registered in the paper registration list 35 (hereinafter, "registered paper"), and calculates a difference evaluation value between the scored values. The extracting unit 13c then estimates a paper, among a plurality of registered papers, whose difference evaluation value with respect to the score values of the user's paper sheet is a predetermined threshold or less, as a paper whose color reproduction characteristics are similar to these of the user's paper sheet, and limits registration in a registered-paper list 29, displayed at the time of pressing a pull-down menu 21 on the color-management setting screen 20 explained later, only to the registered papers whose difference evaluation value to the score value of the user's paper sheet is the predetermined threshold or less. That is, the extracting unit 13c extracts a paper capable of approximating the color reproduction characteristics of the user's paper sheet (medium used) set in the image forming apparatus 42, among the registered papers, according to the pressing of the set-paper estimation button 33, to thereby narrow down papers displayed in the registered-paper list 29. When the user specifies an arbitrary paper from the registered-paper list 29, the paper profile corresponding to the paper specified by the user is read from the paper profile DB 15, and the read paper profile is set in the PCS to CMYK converter 6 of the color management module 3. The PCS to CMYK converter 6 of the color management module 3 thereby converts the PCS signals to the CMYK signals by using the paper profile corresponding to the paper specified by the user among the registered papers estimated that their color reproduction characteristics are similar to these of the user's paper sheet.

The calibration-chart output control unit 13d transmits, when the calibration execution button 22 is pressed on the color-management setting screen 20 explained later, test image data (patch image data) to the tone correcting unit 8, and causes it to be output from the image forming apparatus 42. The output image 11 of the image forming apparatus 42 at this time is a calibration chart with a patch image of a plurality of single colors and of mixed colors formed on the user's paper sheet (medium used) with unknown color reproduction characteristics. That is, the calibration-chart output control unit 13d performs a process for causing the image forming apparatus 42 to output the calibration chart at the time of calibration. The calibration chart output from the image forming apparatus 42 is colorimetrically measured by the color measuring unit 12 according to a user operation.

The colorimetric-value acquiring unit 13e acquires a colorimetric value obtained by colorimetrically measuring the calibration chart from the color measuring unit 12.

The classifying unit 13f classifies a plurality of registered papers registered to the paper registration list 35 into a plurality of groups (paper types) based on the respective score values of the registered papers.

The determining unit 13g determines to which of the groups (paper types) classified by the classifying unit 13f the user's paper sheet belongs, based on the score values of the user's paper sheet calculated by the calculating unit 13b.

The selecting unit 13h selects a registered paper that belongs to the same group as that of the user's paper sheet, among the registered papers registered in the paper registration list 35, that is, selects a registered paper with the color reproduction characteristics closest to the characteristics of the colorimetric value acquired by the colorimetric-value acquiring unit 13e, from among the registered papers whose paper type is the same as that of the user's paper sheet.

The profile managing unit 13 reads a paper profile corresponding to the registered paper selected by the selecting unit 13h from the paper profile DB 15, and sets the read paper profile in the PCS to CMYK converter 6 of the color management module 3. The PCS to CMYK converter 6 of the color management module 3 thereby converts the PCS signals to the CMYK signals by using the paper profile corresponding to the registered paper selected by the selecting unit 13h.

The generating unit 131 generates a paper correction TRC being a tone correction parameter for correcting a difference in the color reproduction characteristics between the registered paper selected by the selecting unit 13h and the user's paper sheet. That is, the generating unit 13i newly generates, when the PCS to CMYK converter 6 of the color management module 3 uses the paper profile corresponding to the registered paper selected by the selecting unit 13h to perform color conversion, a paper correction TRC for each of the C, M, Y, and K colors in combination with the color conversion performed in the PCS to CMYK converter 6, in order to perform tone correction so that output color reproduction characteristics from the image forming apparatus 42 are made best.

When the paper correction TRC is newly generated by the generating unit 131, the profile managing unit 13 sets the paper correction TRC in the paper-corresponding correcting unit 7. Thereby, the paper-corresponding correcting unit 7 uses the paper correction TRC generated by the generating unit 13i to correct the toner characteristics of the basic colors of C, M, Y, and K of the image forming apparatus 42 so as to match these of the user's paper sheet.

In the above explanation, the profile in each of the conversion elements in the color management module 3 only requires the conversion from the RGB or CMYK device color space to the PCS, or one-directional conversion parameter of its reverse conversion. However, the paper profile has at least both the conversion parameters as a pair, and the profile for a CMYK to PCS conversion of these conversion parameters is used for selection of an optimal profile and error estimation of reproduced colors, explained later, and the profile for a PCS to CMYK conversion is set in the PCS to CMYK converter 6 of the color management module 3. Therefore, one profile for a CMYK to PCS conversion and a plurality of profiles for a PCS to CMYK conversion corresponding to an object are contained in the entries of the paper profile DB 15, selection of an optimal entry from the paper profile DB 15 and selection or new calculation of a paper correction TRC are performed by using the profile for a CMYK to PCS conversion in each of the entries, the obtained TRC and the optimal entry are registered in the registration list of the profile managing unit 13 explained later in association with each other (if necessary), and the profiles for PCS to CMYK conversion in the same entry are set in the PCS to CMYK converters 6 which are switched according to the object, to thereby enable association between color conversions suitable for the object.

It goes without saying that the profile according to the profile format of the ICC (hereinafter, "ICC profile") can be used as each of the profiles. When the ICC profile is used as the paper profile in particular, the ICC profile stores a PCS to CMYK conversion profile and a CMYK to PCS conversion profile for each three types of rendering intents: "perceptual", "relative colorimetric", and "saturation", and, therefore, the CMYK to PCS conversion profile for the relative colorimetric is used for selection of an optimal profile and for error estimation of reproduced colors, explained later.

Next, a specific example of the user interface provided in the color image processing apparatus 41 according to the present embodiment will be explained below. Fig. 5 is an example the color-management setting screen displayed as a user interface on the console 18 of the color image processing apparatus 41. The color-management setting screen 20 displays the pull-down menu 21, the calibration execution button 22, pull-down menus 23 and 24, a set button 25, a cancel button 26, a check box 32, and the set-paper estimation button 33.

Each of the pull-down menus 21, 23, and 24 corresponds to the user interface through which an element of the DBs in Fig. 3 is selected, the pull-down menu 21 corresponds to the paper profile DB 15, and the pull-down menus 23 and 24 correspond to the simulation profile DB 14.

Options 27 appearing when the pull-down menu 21 is pressed contain "Automatic Selection by Calibration" 28, the registered-paper list 29, a new/edit menu 30, and a delete menu 31. The registered-paper list 29 is associated with the user registration area 37 of the paper registration list 35. The set-paper estimation button 33 is a button to automatically select a menu optimal for being set in the pull-down menu 21 and to instruct the setting. Details of these operations will be explained later. When the pull-down menus 23 and 24 are pressed, a registered-paper list of the simulation profile DB 14 respectively related thereto appears as the options.

When the check box 32 is checked and if a profile is embedded in the original data 1 of Fig. 3, the settings of the pull-down menus 23 and 24 are ignored, and the embedded profile instead of the settings is used as a setting parameter of the RGB to PCS converter 4 or the CMYK to PCS converter 5.

Fig. 6 is an example of a paper-profile setting screen 70 displayed when the new/edit menu 30 is selected from the options 27 of the pull-down menu 21 in Fig. 5. The paper-profile setting screen 70 displays pull-down menus 71, 72, and 73, the calibration execution button 22, a set button 77, and a cancel button 78.

When the pull-down menu 71 of the paper-profile setting screen 70 is pressed, a new registration menu 79 and the registered-paper list 29 appear. The user selects a registration name being a target to be edited from the registered-paper list 29 or selects the new registration menu 79 to register a new name in the list.

When the pull-down menu 72 is pressed, a mode menu 80 appears. Each item of the mode menu 80 is associated with the tone processing parameter registered in the tone-processing parameter DB 17 and to be set in the tone processing unit 9 and with the tone correction data (TRC) to be set in the tone correcting unit 8. "Tone priority" is a "tone emphasis" parameter suitable for photo images, and resolution priority" is a "resolution emphasis" parameter suitable for characters and drawings, both of which are set in the tone processing unit 9. At the same time, the tone correction data (TRC) matching the parameters are set in the tone correcting unit 8. These set values are applied to the calibration chart output upon execution of calibration.

The pull-down menu 73 is a user interface used to select and specify a profile previously registered in the paper profile DB 15. When the pull-down menu 73 is pressed, a paper-profile selection menu 81 appears, When "Automatic selection" is specifically selected by the user from the paper-profile selection menu 81, an optimal paper profile is automatically selected upon execution of calibration.

When the pull-down menu 71 is pressed and a registered entry is selected from the registered-paper list 29, those associated with the selected entry name are selected and displayed in the pull-down menu 72 and the pull-down menu 73. When the new registration menu 79 is selected, the tone priority and the automatic selection of the paper profile are selected as default values.

The calibration execution button 22 is a user interface that the user presses to instruct execution of calibration.

Next, a specific example of processes executed in the color image processing apparatus 41 according to the present embodiment will be explained in further detail below.

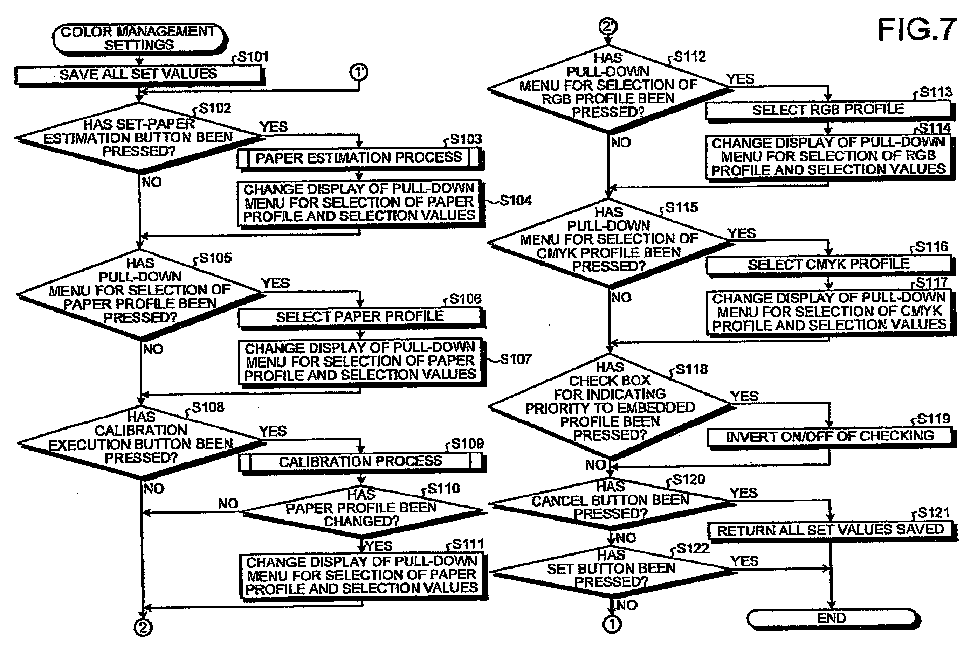

Fig. 7 is a flowchart of a color management setting process executed by the profile managing unit 13 according to a user operation using the color-management setting screen 20 of Fig. 5. It should be noted that "node 1" surrounded by a circle in Fig. 7 represents a connection to "node 1'" and "node 2" represents a connection to "node 2'". As illustrated in Fig. 7, a loop formed with the connection of the node 1 and the node 1' represents a main event loop.

When the color-management setting screen 20 is displayed on the console 18 of the color image processing apparatus 41, firstly, at Step S101, initialization of the screen (a preset default value when a set value is undefined) according to the current set value and save of set values are performed.

Next, at Step S102, it is determined whether the set-paper estimation button 33 has been pressed on the color-management setting screen 20. When the set-paper estimation button 33 has been pressed (Yes at Step S102), the process proceeds to Step S103, while when the set-paper estimation button 33 has not been pressed (No at Step S102), the process proceeds to Step S105.

At Step S103, a registered paper similar to the user's paper sheet used as an image formation medium in the image forming apparatus 42 is estimated (paper estimation process). Specifically, for example, when the paper feed stacker 94a is previously selected through another user interface different from the color-management setting screen 20, a detected value is acquired from the spectral colorimetric device 97a, while when the paper feed stacker 94b is selected, a detected value is acquired from the spectral colorimetric device 97b. Score values being feature amounts reflecting the color reproduction characteristics of the user's paper sheet are calculated based on the acquired spectral reflectance of the user's paper sheet. Then, among the already registered papers, a paper, in which a difference evaluation value to the score values of the user's paper sheet is a predetermined threshold or less, is estimated as the registered paper whose color reproduction characteristics are similar to these of the user's paper sheet. The paper estimation process will be explained in detail later.

At Step S104, the display of the pull-down menu 21 for selection of a paper profile and selection values are changed based on the estimated value obtained at Step S103. If there is one or more registered papers estimated at Step S103 that their color reproduction characteristics are similar to these of the user's paper sheet, then the registered-paper list 29, displayed as the options 27, of the pull-down menu 21 for selection of a paper profile is limited only to the registered papers estimated that their color reproduction characteristics are similar to these of the user's paper sheet.

At Step S105, it is determined whether the pull-down menu 21 for selection of a paper profile has been pressed on the color-management setting screen 20. When the pull-down menu 21 has been pressed (Yes at Step S105), the process proceeds to Step S106, while when the pull--down menu 21 has not been pressed (No at Step S105), the process proceeds to step S108.

At Step S106, the paper profile to be set in the PCS to CMYK converter 6 of the color management module 3 is selected according to the options 27 of the pull-down menu 21. When the new/edit menu 30 is selected from among the options 27, an edit process is executed using the paper-profile setting screen 70 as illustrated in Fig. 6, and then the paper profile is selected. When the delete menu 31 is selected from among the options 27, an entry as a target to be deleted is selected from the registered-paper list 29 and deleted according to the user operation using a separately displayed selection screen (not illustrated), and then the paper profile is selected. If any paper profile other than the paper profile is selected, the selection value is fixed, and the process proceeds to Step S107.

At Step S107 the display of the pull-down menu 21 for selection of a paper profile and the selection values are changed according to the selection value obtained at Step S106.

At Step S108, it is determined whether the calibration execution button 22 has been pressed on the color-management setting screen 20. When the calibration execution button 22 has been pressed (Yes at Step S108), the process proceeds to Step S109, while when the calibration execution button 22 has not been pressed (No at Step S108), the process proceeds to Step S112.

At Step S109, the calibration process is performed on the user's paper sheet with unknown color reproduction characteristics, and the process proceeds to Step S110. The calibration process will be explained in detail later.

At Step S110, it is determined whether the paper profile to be set in the PCS to CMYK converter 6 of the color management module 3 has been changed by the calibration process at Step S109. When the paper profile has been changed (Yes at Step S110), the process proceeds to Step S111, while when the paper profile has not been changed (No at Step S110), then the process proceeds to Step S112.

At Step S111, the display of the pull-down menu 21 for selection of a paper profile and the selection values are changed according to the result of the calibration process at Step S109.

At Step S112, it is determined whether the pull-down menu 23 for selection of an RGB simulation profile has been pressed on the color-management setting screen 20. When the pull-down menu 23 has been pressed (Yes at Step S112), the process proceeds to Step S113, while when the pull-down menu 23 has not been pressed (No at Step S112), the process proceeds to Step S115.

At Step S113, the simulation profile to be set in the RGB to PCS converter 4 of the color management module 3 is selected according to the options of the pull-down menu 23, and the process proceeds to Step S114.

At Step S114, the display of the pull-down menu 23 for selection of an RGB simulation profile and the selection values are changed according to the selection value obtained at Step S113,

At Step S115, it is determined whether the pull-down menu 24 for selection of a CMYK simulation profile has been pressed on the color-management setting screen 20. When the pull-down menu 24 has been pressed (Yes at Step S115), the process proceeds to Step S116, while when the pull-down menu 24 has not been pressed (No at Step S115), the process proceeds to Step S118.

At Step S116, the simulation profile to be set in the CMYK to PCS converter 5 of the color management module 3 is selected according to the options of the pull-down menu 24, and the process proceeds to Step S117.

At Step S117, the display of the pull-down menu 24 for selection of a CMYK simulation profile and the selection values are changed according to the selection value obtained at step S116.

At Step S118, it is determined whether the check box 32 for indicating priority to the embedded profile has been pressed on the color-management setting screen 20. When the check box 32 has been pressed (Yes at Step S118), the process proceeds to Step S119, while when the check box 32 has not been pressed (No at Step S118), the process proceeds to Step S120.

At Step S119, an ON/OFF display status of the check box 32 and its value are inverted (toggle operation), and the process proceeds to Step S120.

At Step S120, it is determined whether the cancel button 26 has been pressed on the color-management setting screen 20. When the cancel button 26 has been pressed (Yes at Step S120), the process proceeds to Step S121, while when the cancel button 26 has not been pressed (No at Step S120), the process proceeds to Step S122.

At Step S121, all the set values having been saved at Step S101 are returned, and a series of the processes are ended.

At Step S122, it is determined whether the set button 25 has been pressed on the color-management setting screen 20. When the set button 25 has been pressed (Yes at Step S122), the series of processes are ended while holding the set values, while when the set button 25 has not been pressed (No at Step S122), the process returns to Step S102, where the subsequent processes are repeated.

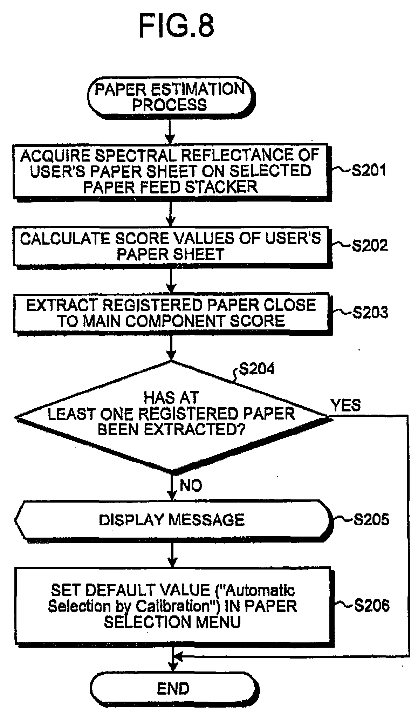

Fig. 8 is a flowchart of details of the paper estimation process at Step S103 of Fig. 7.

When the paper estimation process is started, first, at Step S201, a spectral reflectance of a user's paper sheet which is used as an image formation medium and whose color reproduction characteristics are unknown is acquired from a spectral colorimetric device (e.g., the spectral colorimetric device 97a) corresponding to a paper feed stacker (e.g., the paper feed stacker 94a) selected in the image forming apparatus 42.

At Step S202, score values (s1, s2, s3) being scores of the main components up to the third main component of the user's paper sheet are calculated based on an average spectral reflectance of white colors of paper sheets and main component vectors which are previously calculated from every possible paper types, and also based on the spectral reflectance of the user's paper sheet acquired at Step S201.

At Step S203, registered papers whose color reproduction characteristics are similar to these of the user's paper sheet are extracted, from among the registered papers registered in the entries of the paper registration list 35, using a previously experimentally defined threshold θd, weighting factors (wl, w2, w3), a candidate upper limit N, the score values (s1, s2, s3) of the user's paper sheet calculated at Step S202, and also using score values (s1_i, s2_i, s3_i) of the registered papers registered in the entries of the paper registration list 35.

Specifically, a difference evaluation value di between the score values (s1, s2, s3) of the user's paper sheet and the score values (s1_i, s2_i, s3_i) of the registered papers are calculated using the following equation (1).

$$di = \sqrt{w1(s1\_i - s1)^2 + w2(s2\_i - s2)^2 + w3(s3\_i - s3)^2} \qquad (1)$$

Registered papers having the score values in which the difference evaluation value di to the score values of the user's paper sheet is the threshold θd or less are extracted by up to the maximum N pieces in ascending order of the difference evaluation values di.

At Step S204, it is determined whether at least one registered paper has been extracted at Step S203. When at least one registered paper has been extracted (Yes at Step S204), the display of the pull-down menu 21 for selection of a paper profile and the selection values are set to a registered paper whose difference evaluation value di is the minimum value (if there is a plurality of registered papers whose difference evaluation value di is the minimum value, then, for example, one with a smallest number of register ids is given priority), and the display of the registered-paper list 29 of the options 27 illustrated in Fig. 5 is limited only to the registered papers extracted at Step S203, and at the same time, these registered papers are changed so that they are rearranged in ascending order of the difference evaluation values di and displayed in this manner, and the process is ended.

Meanwhile, when even one registered paper is not extracted at Step S203 (No at Step S204), at Step S205, a message indicating that there is no registered paper similar to the user's paper sheet is displayed on the console 18. At Step S206, the selection value corresponding to "Automatic Selection by Calibration" 28 is specified as the selection value of the pull-down menu 21 for selection of a paper profile illustrated in Fig. 5, and the process is ended.

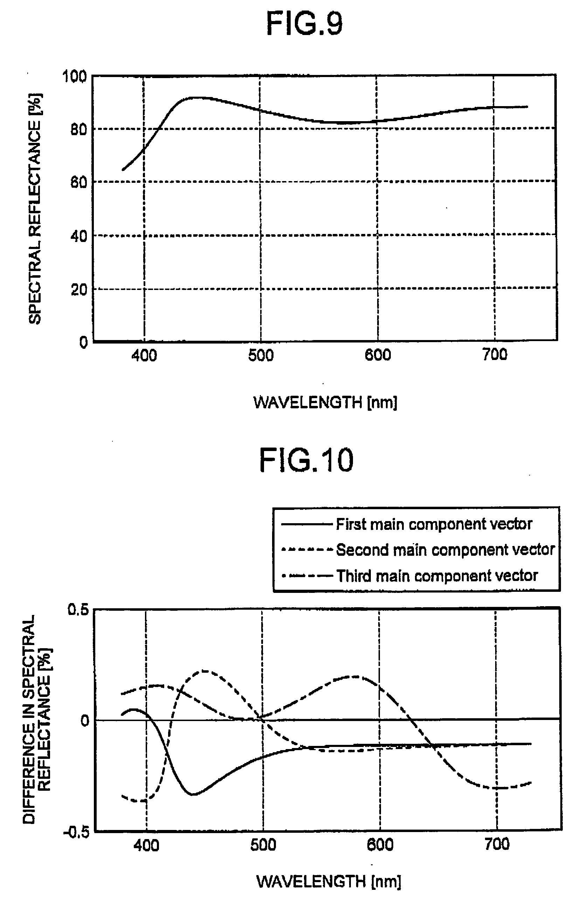

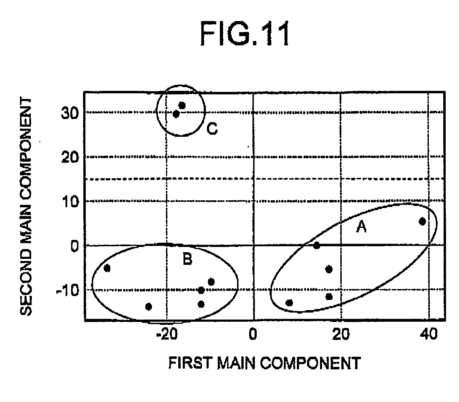

Paper sheets used as an image formation medium can be generally classified into some paper types according to the main component score of their spectral reflectance. Fig. 9 is a diagram of an average spectral reflectance experimentally obtained from a typical paper sample group, and Fig. 10 is a diagram of main component vectors of the paper sample group. As illustrated in Fig. 9, an x-axis represents wavelength (nm) of light, and a y-axis represents spectral reflectance (%). As illustrated in Fig. 10, the x-axis represents wavelength (nm) of light, and the y-axis represents a difference (%) from an average spectral reflectance. Fig. 11 represents a score distribution of a first main component and a second main component of paper included in the paper sample group, and the x-axis represents a first main component score and the y-axis represents a second main component score.

In the example of Fig. 11, the first main component score is divided using threshold θ1=0, and the second main component score is divided using threshold θ2=15, so that the paper samples are largely classified into three paper types: type A, type B, and type C. These paper types indicate typical tendencies of their spectral reflectance characteristics. Therefore, if paper sheets belong to the same paper type, the spectral reflectance characteristics of the papers are close to each other, and therefore reproduced colors can be approximated to each other to some extent within a common color gamut only by adjusting the TRC. Conversely, the spectral reflectance characteristics of papers are largely different between different paper types, which causes a difference in essential color reproduction characteristics in a spectral view point, and thus the mutual approximation of the reproduced colors cannot sufficiently be performed only by the TRC.

Therefore, the color image processing apparatus 41 according to the present embodiment is configured to classify, when calibration is performed on the user's paper sheet, the registered papers registered in the paper registration list 35 into the paper types using the method based on their score values, and to determine to which of the paper types the user's paper sheet belongs. From the registered papers classified into the same paper type as that of the user's paper sheet, a paper profile corresponding to the paper having color reproduction characteristics closest to the colorimetric value of the calibration chart output using the user's paper sheet is selected as a paper profile used for color conversion when an image is formed on the user's paper sheet. A function of classifying the registered papers into the paper types is the classifying unit 13f of the profile managing unit 13, and a function of determining to which of the paper types the user's paper sheet belongs is the determining unit 13g of the profile managing unit 13.

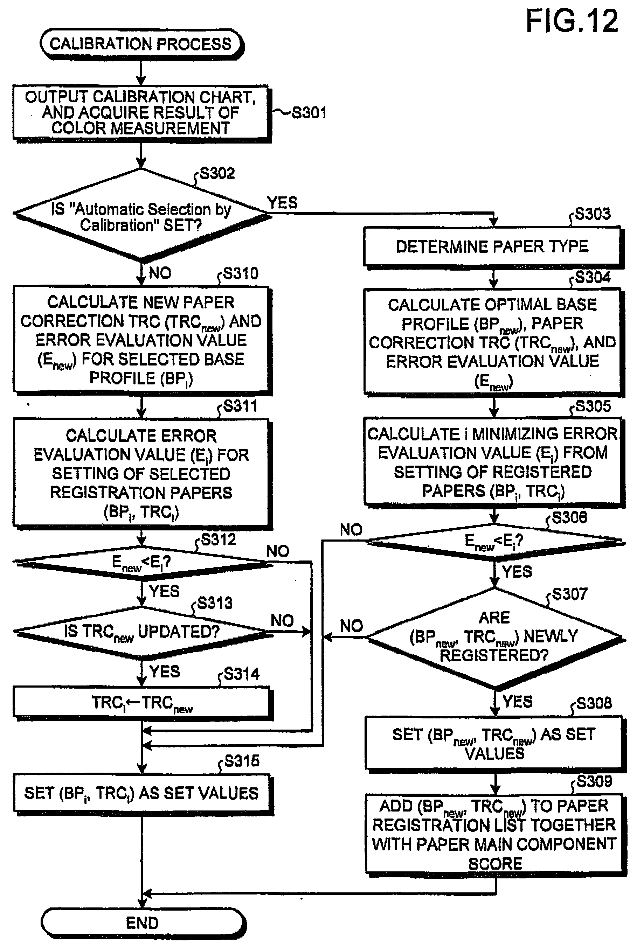

Fig. 12 is a flowchart of details of the calibration process at Step S109 of Fig. 7.

When the calibration process is started, firstly, at Step S301, the calibration chart is output, and guidance is implemented so as to prompt the user to colorimetrically measure the output calibration chart using the color measuring unit 12. When the user carries out the color measurement of the calibration chart using the color measuring unit 12 according to the guidance, a colorimetric value of the calibration chart is acquired from the color measuring unit 12. When the set button 25 illustrated in Fig. 5 is pressed while the colorimetric value is not acquired, a warning message indicating that the calibration is not implemented is displayed to the user so as to prompt the user to select either one of implementation and cancel of the calibration.

At Step S302, it is determined whether the set value of the pull-down menu 21 for paper profile settings is a set value corresponding to the "Automatic Selection by Calibration" 28. When the set value of the pull-down menu 21 is the set value corresponding to the "Automatic Selection by Calibration" 28 (Yes at Step S302), the process proceeds to Step S303, while when the set value of the pull-down menu 21 is not the set value corresponding to the "Automatic Selection by Calibration" 28 (No at Step S302), then the process proceeds to Step S310.

At Step S303, it is determined to which of the previously classified paper types the user's paper sheet belongs by using the score values calculated in the above manner based on the spectral reflectance of the user's paper sheet. Specifically, the paper type to which the user's paper sheet belongs is determined using the score values (s1, s2, s3) of the user'a paper sheet and the preset thresholds $\theta1$ and $\theta2$ in such a manner that if $s1 > \theta1$, then the user's paper sheet is type A, if $s1 < \theta1$ and $s2 < \theta2$, then type B, and if $s1 < \theta1$ and $s2 \geq \theta2$, then type C. The process performed at Step S303 produces the effect of narrowing down a search range at subsequent Step S304 and the effect of guaranteeing some consistency in search results.

At Step S304, a paper profile ($BP_{new}$) having the color reproduction characteristics closest to the characteristics of the colorimetric value of the calibration chart acquired at Step S301 is selected from among paper profiles corresponding to the registered papers that belong to the paper type the same as the paper type of the user's paper sheet determined at Step S303 among the registered papers registered in the paper registration list 35, by using the method explained later. Each paper type of the registered papers registered in the paper registration list 35 is determined by a method the same, as the method using the score values associated with each of the registered papers registered therein. In addition, a paper profile being a base (hereinafter, "base profile") is selected, and at the same time, a paper correction TRC ($TRC_{new}$) for each of the C, M, Y, K colors which best approximates output color reproduction characteristics is generated in combination with the base profile ($BP_{new}$), and an error evaluation value ($E_{new}$) when the paper correction TRC ($TRC_{new}$) is used is calculated.

If there are too many registered papers that belong to the same paper type as that of the user's paper sheet and if it takes long time to select the base profile ($BP_{new}$), a smallest difference evaluation value di of the score values with respect to the user's paper sheet is given priority, and limiting the number of candidates to be compared is effective.

At Step S305, for a profile set value Prof. id and TRC in the entries of the paper registration list 35, error evaluation values E at the time of using them are calculated, and entries ($BP_i$, $TRC_i$) in which E is a minimum value $E_i$ are selected.

At Step S306, a comparison is made between the error evaluation value ($E_{new}$) calculated at Step S304 and the minimum value $E_i$ of the error evaluation value when the paper profile and the paper correction TRC in the entries of the paper registration list 35 are used, and if $E_{new} < E_i$ (Yes at Step S306), the process proceeds to Step S307, while if $E_{new} \geq E_i$ (No at Step S306) the process proceeds to Step S315.

At Step S307, a dialog box, asking for an instruction as to whether to newly register a combination of the base profile ($BP_{new}$) selected at Step S304 and the generated paper correction TRC $TRC_{new}$), is displayed on the console 18. When the user instructs the new registration (Yes at Step S307), the process proceeds to Step S308, while when the user does not instruct the new registration (No at Step S307), the process proceeds to Step S315.

At Step S308, the base profile ($BP_{new}$) selected at Step S304 is set in the PCS to CMYK converter 6 of the color management module 3, and the paper correction TRC ($TRC_{new}$) generated at Step S304 is set in the paper-corresponding correcting unit 7. At Step S309, the paper correction TRC (TRCnew) generated at Step S304 is registered in the paper correction TRC-DB 16, a name is given to a link to ($BP_{new}$, $TRC_{new}$), the name is added to the paper registration list 35 together with the score values calculated based on the spectral reflectance of the user's paper sheet, and the process is ended.

Meanwhile, at the previous Step S302, when the set value of the pull-down menu 21 for paper profile settings is not the set value corresponding to the "Automatic Selection by Calibration" 28, that is, when the entry registered in the paper registration list 35 is selected, at Step S310, a paper correction TRC ($TRC_{new}$) minimizing the error evaluation value ($E_{new}$) is newly calculated for the paper profile ($BP_i$) of the selected entry, and the process proceeds to Step S311.

At Step S311, an error evaluation value $E_i$ is calculated when the paper profile ($BP_i$) of the selected entry and the paper correction TRC ($TRC_i$) are used.

At Step S312, a comparison is made between the error evaluation value ($E_{new}$) at the time of using the paper correction TRC ($TRC_{new}$) calculated at Step S310 and the error evaluation value $E_i$ at the time of using the already-registered paper correction TRC ($TRC_i$) calculated at Step S311, and if $E_{new} < E_i$ (Yes at Step S312), the process proceeds to Step S313, while if $E_{new \geq} E_i$ (No at Step S312), the process proceeds to Step S315.

At Step S313, a dialog box, asking for an instruction as to whether to newly register the paper correction TRC ($TRC_{new}$) calculated at Step S310, is displayed on the console 18. When the user instructs the new registration (Yes at Step S313), the process proceeds to Step S314, while when the user does not instruct the new registration (No at Step S313), the process proceeds to Step S315.

At Step S314, the paper correction TRC(TRC$_{new}$) calculated at Step S310 is registered in the paper correction TRC-DB 16, and TRC$_i$ of the selected entries, (BP$_i$, TRC$_i$) in the paper registration list 35 is replaced with TRC$_{new}$.

At Step S315, the paper profile (BP$_i$) of the selected entry is set in the PCS to CMYK converter 6 of the color management module 3 and the paper correction TRC (TRC$_i$) is set in the paper-corresponding correcting unit 7, and the process is ended.

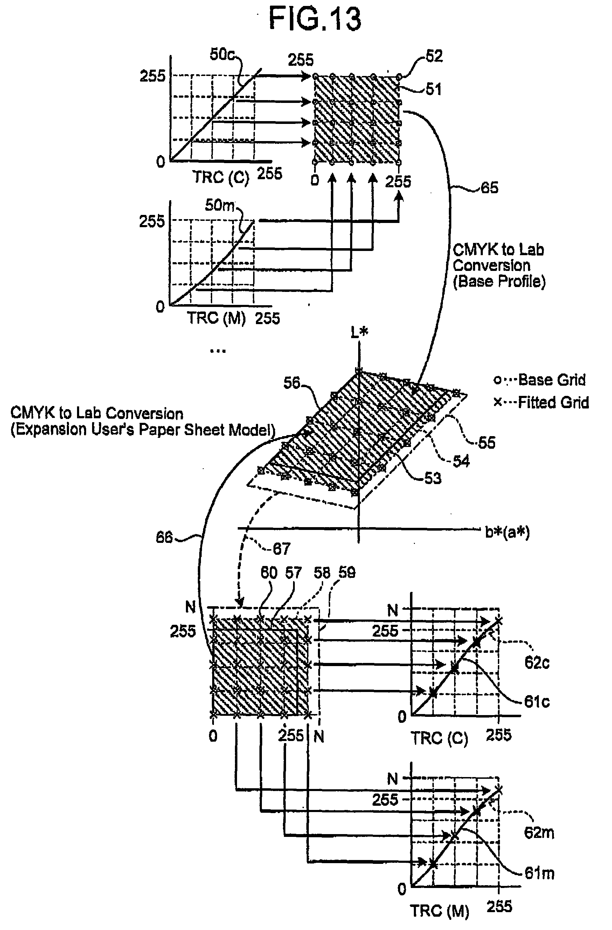

Fig. 13 is a conceptual diagram for explaining a method of generating a paper correction TRC for minimizing an error evaluation value with paper characteristics for a paper profile. $_A$ specific example of the method of generating the paper correction TRC will be explained in further detail below with referring to Fig. 13.

To output the calibration chart upon calibration, a specific tone processing parameter (screen set) based on the calibration and the corresponding tone correction data (TRC) are selected from the tone-processing parameter DB 17 and are set in the tone processing unit 9 and the tone correcting unit 8, respectively. At this time, the tone correction data (TRC) to be set in the tone correcting unit 8 is corrected so that tone characteristics of the CMYK basic colors up to an image output of the subsequent units including the tone correcting unit 8 are approximately predefined characteristics without depending on the tone processing parameter set in the tone processing unit 9. As illustrated in Fig. 13, the tone correction data (TRC) for cyan is represented by curve 50c, and the tone correction data (TRC) for magenta is represented by curve 50m. The same goes for the tone correction data (TRC) for yellow and black, and thus, these tone correction data (TRC) are not illustrated in Fig. 13.

Grid points 52 of a CMYK space 51 are obtained by a combination of six input values x=0, 51, 102, 153, 204, 255 for each channel of C, M, Y, and K on which tone correction has been performed (to simplify the illustration in Fig. 13, two-dimensional grid points of 5×5 are illustrated in a simple manner on a conceptual basis, however, actually, four-dimensional grid points of 6×6×6×6 are obtained). These grid points are converted into grid points on a Lab space 56 through a CMYK to PCS conversion 65 using a paper profile, and the converted grid points are determined as target grid points. The tone correction data (TRC) for each color such as the curves 50c and 50m that is set in the tone correcting unit 8 is predefined for each tone processing parameter so that the target grid points are nearly uniformly distributed on the Lab space 56. Such tone correction data (TRC) is configured, for a standard paper for each paper profile, actually by defining a TRC for each color so that a color difference of each of the colors C, M, Y, and K based on a white color as a reference represents linearity with respect to input tone values in each tone processing parameter setting condition (generally, the number of halftone dot lines).

Meanwhile, the calibration chart output when the previous calibration is executed is patch image data directly fed from the profile managing unit 13 as CMYK input for the tone correcting unit 8, and is the output image 11 in which patch images of 6×6×6×6 colors are reproduced by the image forming apparatus 42 in the combination of C, M, Y, K=0, 51, 102, 153, 204, 255.

The profile managing unit 13 configures a CMYK to PCS conversion model 66 for user's paper sheet with respect to any CMYK input by using Lab values obtained by relativizing the patch colorimetric values and by calculating multi-linear interpolation. The CMYK to PCS conversion model 66 is a model of color reproduction characteristics for the tone correcting unit 8 and the subsequent units illustrated in Fig. 3. If a reproduction color gamut 53 of the user's paper sheet is narrower than a paper profile color gamut 54, then an expanded color gamut 55 is expanded by extrapolation so that it becomes wider than the paper profile color gamut 54. For this expansion, a apace 58, in which an input CMYK space 57 of the CMYK to PCS conversion model 66 for the user's paper sheet is represented by an 8 bit integer value of 0 to 255 for each color, is expanded to an expanded CMYK space 59 in the range of 0 to N (256≦N<512) for each color, and an extrapolation is performed on a portion where a C, M, Y, K input range exceeds 255 by utilizing an interpolation function (interpolation function applied to an CMYK value obtained by replacing a value that exceeds 255 with 255) for an adjacent area. The expansion range N is a value previously defined by experimentally calculating a value so as to cover a solid variation range due to a paper difference.

Referring to an output Lab value Lab$_m$ (c, m, y, k) of the expanded CMYK to PCS conversion model 66 (67) and to a Lab value Lab$_t$ of the target grid point set by using the paper profile, the profile managing unit 13 calculates c', m', y' for minimizing $\Delta E^2 = (Lab_m (c', m', y', k) - Lab_t)^2$ for each element of CMYK, grid points {(c, m, y, k) | c, m, y, k=0, 51, 102, 153, 204, 255}, and sets (c', m', y')=(c, m, y) as a default value. In the above explanation, a value k for K is treated as a fixed value in order to match a Lab space and flexibility.

An adjusted CMYK grid point 60 thus obtained is projected to each of the C, M, Y channels, and least square fitting is performed using a cubic polynomial function, passing through the origin, by using the input grid point values [0, 51, 102, 153, 204, 255} in the x-axis and the corresponding projected adjusted values in the y-axis, so that correction curves 61c, 61m, and 61y (the correction curve 61y is not illustrated in Fig. 13) for respective colors are obtained. Because these correction curves may exceed the range of 0 to 255 due to color gamut expansion, a relaxation process explained later is performed, so that paper correction TRC 62c, 62m, and 62y (the paper correction TRC 62y is not illustrated in Fig. 13) in the range of 0 to 255 can be obtained.

Finally, an average color difference between a CMYK, grid point and a Lab value (Lab$_t$) of a target grid point is again calculated with respect to the combination of the thus obtained paper correction TRC for each of the colors C, M, and Y and the CMYK to PCS conversion model 66 for the user's paper sheet, and the calculated average color difference is determined as an error evaluation value.

The relaxation process includes, for example, a method of determining the correction curves 61c, 61m, and 61y for C, M, and Y as $TRC_C$, $TRC_M$, $TRC_Y$; $x_{max}=\max\{x \mid TRC_c(x) \leq 255, TRC_M(x) \leq 255, TRCy(\times) \leq 255\}$; and the values corresponding to the C, M, Y input values 255 as $TRCc(x_{max})$, $TRC_M(x_{max})$, $TRCy(x_{max})$ respectively; and of smoothly connecting, for $TRC_c$, a point $(x_1, 230)$ where $TRC_c(x_1)=230$ and $(255, TRC_c(x_{max}))$ with a quadric curve.

In the above example, the input CMYK space is divided using the 6x6x6x6 grid points, however, the decrease in the number of divisions for K is effective for the reduction in the number of color measurement patches. For example, the number of divided grid points is set to four points for only K, so that the total number of patches can be set to 6x6x6x4=864 patches capable of being output adequately on about one sheet of A4-size paper. If a decrease in precision does not cause a problem, it is easy to further reduce the number of CMY grid points and to set a smaller number of patches.

As explained above, the color reproduction characteristics based on the calibration-target paper sheet and the tone processing setting condition approximately match the reproduced colors obtained through PCS to CMYK conversion using a selected paper profile. For device-link type conversion, such as RGB to CMYK conversion obtained by combining the RGB to PCS converter 4 and the PCS to CMYK converter 6 of the color management module 3 both illustrated in Fig. 3 or CMYK to CMYK conversion obtained by combining the CMYK to PCS converter 5 and the PCS to CMYK converter 6, a similar system can be easily implemented if a profile is stored in an entry of the paper profile DB 15 associated with a CMYK to PCS profile.

As explained in detail so far with the specific examples exemplified, the color image processing apparatus 41 according to the present embodiment has the function of extracting a paper capable of approximating the color reproduction characteristics of a user's paper sheet, provided in the profile managing unit 13, from among the registered papers registered in the registration list, based on the score values (feature amounts) calculated from the spectral reflectance characteristics of the user's paper sheet with unknown color reproduction characteristics set in the image forming apparatus 42, and has the color-management setting screen 20, as the user interface, provided with the set-paper estimation button 33 used to instruct the profile managing unit 13 to extract the paper. Therefore, the color management for an image formation medium with unknown color reproduction characteristics can be implemented in a simple and appropriate manner.

That is, according to the color image processing apparatus 41 of the present embodiment, the user can easily estimate the type of the color reproduction characteristics of a paper sheet (which is the user's paper sheet with unknown color reproduction characteristics) set in the paper feed stacker 94a or 94b, according to the instruction through the user interface, based on the spectral reflectance obtained from the spectral colorimetric device 97a or 97b. Therefore, there is no need to previously prepare a profile to specify the type of the user's paper sheet. This enhances the utilization of the existing profiles.

According to the color image processing apparatus 41 of the present embodiment, it is configured to extract registered papers capable of approximating the color reproduction characteristics of the user's paper sheet and to utilize the paper profile registered in association with the registered paper selected from among the extracted registered papers. Therefore, the paper profile with a significant color difference can be prevented from being utilized. In addition, because an applicable range of utilization of the paper profile is limited, the reduction in color gamut due to the utilization of the paper profile can be avoided.

According to the color image processing apparatus 41 of the present embodiment, registered papers (and paper profiles) approximating the color reproduction characteristics of the user's paper sheet are extracted (accordingly, this includes determination as to whether a profile is necessary when extraction is disabled), based on the feature amounts calculated from the spectral reflectance directly related to the colors, thus obtaining high reliability in terms of color reproduction.

According to the color image processing apparatus 41 of the present embodiment, it is configured to select, when the existing profile cannot be utilized as it is, a registered paper capable of best approximating the user's paper sheet based on the color measurement result (reproduced color due to the user's paper sheet) of the calibration chart using the user's paper sheet, and to generate the paper correction TRC for use in combination with the selected registered paper, thus configuring a new profile with high precision.

According to the color image processing apparatus 41 of the present embodiment, the selection range at the time of selecting the registered paper capable of best approximating the user's paper sheet is limited to a primarily classified range due to the feature amounts based on the spectral reflectance of the user's paper sheet obtained from the spectral colorimetric device 97a or 97b. In addition, the calculation method itself leads to a simple comparison between feature amounts. Therefore, there is no need to perform correlation calculation between all the existing profiles and the profile corresponding to the user's paper sheet, and therefore both the selection range and the load for determination of the selection can be reduced.

The present embodiment is configured to provide the spectral colorimetric devices 97a and 97b that detect spectral reflectance of paper sheets stacked in the paper feed stackers 94a and 94b, in the image forming apparatus 42, and acquire the spectral reflectance detected by the spectral colorimetric device 97a or 97b provided in the image forming apparatus 42 when the color image processing apparatus 41 acquires the spectral reflectance of the user's paper sheet with unknown color reproduction characteristics. Therefore, the user does not need to perform a specific operation in order to acquire the spectral reflectance of the user's paper sheet.

The image processing process performed by the color image processing apparatus 41 according to the present embodiment is implemented by the image processing program that is mounted as expansion software on the control PC and is executed by a central processing unit (CPU) of the control PC. The image processing program to be executed by the CPU of the control PC is provided in such a manner that, for example, it is previously installed in a ROM or the like of the control PC. Furthermore, it may be configured so that the image processing program to be executed by the CPU of the control PC is provided by being recorded, in a file of an installable form or an executable form, in a computer-readable recording medium, such as a compact disk read only memory (CD-ROM), a flexible disk (FD), a compact disk recordable (CD-R), or a digital versatile disk (DVD). Moreover, it may be configured so that the image processing program to be executed by the CPU of the control PC is stored in a computer connected to a network such as the Internet and provided by being downloaded via the network. In addition, it may be configured so that an output control program to be executed by the CPU of the control PC is provided or distributed via a network such as the Internet.

The image processing program to be executed by the CPU of the control PC has a module configuration including the processing functions illustrated in the functional block diagram of Fig. 3. In actual hardware, a CPU (processor) reads the image processing program from, for example, the ROM and executes the read program so as to load the processing functions into a main storage (RAM), and the processing functions are generated in the main storage.

According to one aspect of the present invention, when an image formation medium with unknown color reproduction characteristics is set in the image forming apparatus and color images are to be formed thereon, an image formation medium capable of approximating the color reproduction characteristics of the image formation medium set in the image forming apparatus is extracted from among the image formation media registered in the registration list according to a user operation received by the user interface. Therefore, the color management for the image formation medium with unknown color reproduction characteristics can be implemented in a simple and appropriate manner.

Although the invention has been described with respect to specific embodiments for a complete and clear disclosure, the appended claims are not to be thus limited but are to be construed as embodying all modifications and alternative constructions that may occur to one skilled in the art that fairly fall within their scope.

**Claims**

**1.** An image processing apparatus that performs image processing to achieve uniformity of reproduced colors in an image forming apparatus (42) that forms color images on an image formation medium by superimposing a plurality of basic colors on each other, the image processing apparatus comprising:

a color converting unit (6) configured to convert color values in a device-dependent color space, being RGB or CMYK, of another device different from the image forming apparatus (42) to color values in the CMYK color space corresponding to the basic colors of the image forming apparatus (42), through an intermediate conversion to a Profile Connection Space, PCS, based on a registered color conversion parameter;
a registration list (35) in which a plurality of color conversion parameters are registered in association with a plurality of image formation media with different color reproduction characteristics, for conversion by the color converting unit (6) from the PCS to the CMYK color space;
a parameter managing unit (13) that includes a function of extracting, based on a feature amount calculated from spectral reflectance characteristics of an image formation medium set in the image forming apparatus to be a medium used, an image formation medium capable of approximating color reproduction characteristics of the medium used, from among the plurality of image formation media registered in the registration list (35),
wherein the feature amount of each of the image formation media is registered in the registration list (35) in association with the plurality of registered image formation media, the parameter managing unit being configured to classify the plurality of image formation media registered in the registration list (35) into a plurality of groups based on the feature amount of each image formation medium, and to determine which of the plurality of groups the medium used belongs to based on the feature amount of the medium used;
the apparatus further comprising a user interface configured to receive a user operation for instructing the parameter managing unit (13) to extract an image formation medium capable of approximating the color reproduction characteristics of the medium used, and to present the image formation medium extracted by the parameter managing unit (13) to the user; and
a medium-corresponding correcting unit configured to correct tone characteristics of each of the basic colors of the image forming apparatus (42) in association with the medium used, based on a tone correction parameter,

wherein the user interface includes a function of receiving a user operation for instructing a start of calibration, the parameter managing unit (13) being configured to output, when the user interface receives the user operation for instructing the start of calibration, a calibration chart obtained by forming a plurality of patch images on the medium used, to the image forming apparatus (42); wherein the parameter managing unit (13) is configured to select an image formation medium having the color reproduction characteristics closest to the characteristics of the colorimetric values obtained by measuring the colors of the calibration chart, from among the image formation media classified into the group to which it is determined that the medium used belongs; and to generate the tone correction parameter for correcting a difference in color reproduction characteristics between the selected image formation medium and the medium used in the medium-corresponding correcting unit,

wherein the color conversion parameter corresponding to the selected image formation medium is set in the color converting unit (6), the generated tone correction parameter is set in the medium-corresponding correcting unit, and a combination of the color conversion parameter with the tone correction parameter is registered in the registration list (35) in association with the feature amount calculated from the spectral reflectance characteristics of the medium used.

2. The image processing apparatus according to claim 1, wherein

the image forming apparatus (42) includes

a medium container configured to contain image formation media, and
a medium sensor configured to detect a spectral reflectance of image formation media contained in the medium container, and

the parameter managing unit (13) is configured to extract the feature amount of the medium used from the spectral reflectance detected by the medium sensor while the medium used is contained in the medium container.

3. An image processing method executed in an image processing apparatus that achieves uniformity of reproduced colors in an image forming apparatus (42) that forms color images on an image formation medium by superimposing a plurality of basic colors on each other, and that includes a color converting unit (6) that converts color values in a device-dependent color space, being RGB or CMYK, of another device different from the image forming apparatus (42) to color values in the CMYK color space corresponding to the basic colors of the image forming apparatus (42), through an intermediate conversion to a Profile Connection Space, PCS, based on a registered color conversion parameter, and also includes a registration list (35) in which a plurality of color conversion parameters are registered in association with a plurality of image formation media with different color reproduction characteristics, for conversion by the color converting unit (6) from the PCS to the CMYK color space; the image processing method comprising:

classifying the plurality of image formation media registered in the registration list (35) into a plurality of groups based on a feature amount calculated from spectral reflectance characteristics of each image formation medium, wherein the feature amount of each of the image formation media is registered in the registration list (35) in association with the plurality of registered image formation media,
receiving a user operation for instructing extraction of an image formation medium capable of approximating color reproduction characteristics of an image formation medium, set in the image forming apparatus to be a medium used (42), from among the plurality of image formation media registered in the registration list (35);
determining which of the plurality of groups the medium used belongs to based on the feature amount of the medium used;
receiving a user operation for instructing a start of calibration,
outputting, in response to the user operation for instructing the start of calibration, a calibration chart obtained by forming a plurality of patch images on the medium used;
selecting an image formation medium having the color reproduction characteristics closest to characteristics of colorimetric values obtained by measuring colors of the calibration chart, among the plurality of image formation media in the group to which it is determined that the medium used belongs;
generating a tone correction parameter for correcting a difference in color reproduction characteristics between the selected image formation medium and the medium used;
correcting tone characteristics of each of the basic colors of the image forming apparatus (42) in association with the medium used, based on the tone correction parameter,
registering a combination of the color conversion parameter with the tone correction parameter in the registration list (35) in association with a feature amount calculated from the spectral reflectance characteristics of the medium used; and

presenting the extracted image formation medium to the user.

4. A computer program product comprising a non-transitory computer-usable medium having an image processing program for causing an image processing apparatus to execute a method according to claim 3.

**Patentansprüche**

1. Bildverarbeitungsgerät, das Bildverarbeitung durchführt, um Gleichförmigkeit von reproduzierten Farben in einem Bilderzeugungsgerät (42) zu erreichen, das durch Überlagern einer Vielzahl von Grundfarben übereinander Farbbilder auf einem Bilderzeugungsmedium erzeugt, das Bildverarbeitungsgerät umfassend:

eine Farbumwandlungseinheit (6), konfiguriert zum Umwandeln von Farbwerten in einem vorrichtungsabhängigen Farbraum, der RGB oder CMYK ist, einer anderen Vorrichtung, die von dem Bilderzeugungsgerät (42) verschieden ist, in Farbwerte in dem CMYK-Farbraum korrespondierend mit den Grundfarben des Bilderzeugungsgeräts (42) durch eine zwischenliegende Umwandlung in einen Austausch-Farbraum (PCS) basierend auf einem registrierten Farbumwandlungsparameter;
eine Registrationsliste (35), in der eine Vielzahl von Farbumwandlungsparametern in Assoziation mit einer Vielzahl von Bilderzeugungsmedien mit verschiedenen Farbreproduktionscharakteristika für Umwandlung durch die Farbumwandlungseinheit (6) aus dem PSC in den CMYK-Farbraum registriert ist;
eine Parameterverwaltungseinheit (13), die eine Funktion des Extrahierens, basierend auf einem Merkmalsbetrag, berechnet aus Spektralreflexionscharakteristika eines Bilderzeugungsmediums, eingesetzt in dem Bilderzeugungsgerät als ein verwendetes Medium, eines Bilderzeugungsmediums, das imstande ist, die Farbreproduktionscharakteristika des verwendeten Mediums anzunähern, aus der Vielzahl von Bilderzeugungsmedien, die in der Registrationsliste (35) registriert sind, enthält,
wobei der Merkmalsbetrag jedes der Bilderzeugungsmedien in der Registrationsliste (35) in Assoziation mit der Vielzahl von registrierten Bilderzeugungsmedien registriert ist, wobei die Parameterverwaltungseinheit konfiguriert wird, die Vielzahl von Bilderzeugungsmedien, die in der Registrationsliste (35) registriert sind, in eine Vielzahl von Gruppen basierend auf dem Merkmalsbetrag jedes Bilderzeugungsmediums zu klassifizieren und zu bestimmen, zu welcher der Vielzahl von Gruppen das verwendete Medium gehört, basierend auf dem Merkmalsbetrag des verwendeten Mediums;
wobei das Gerät ferner eine Benutzerschnittstelle umfasst, die konfiguriert ist, eine Benutzerbedienung zu empfangen, um die Parameterverwaltungseinheit (13) anzuweisen, ein Bilderzeugungsmedium zu extrahieren, das imstande ist, die Farbreproduktionscharakteristika des verwendeten Mediums anzunähern, und das durch die Parameterverwaltungseinheit (13) extrahierte Bilderzeugungsmedium dem Benutzer zu präsentieren; und
eine Medium-korrespondierende Korrektureinheit, konfiguriert zum Korrigieren von Farbtoncharakteristika jeder der Grundfarben des Bilderzeugungsgeräts (42) in Assoziation mit dem verwendeten Medium basierend auf einem Farbtonkorrekturparameter,
wobei die Benutzerschnittstelle eine Funktion des Empfangens einer Benutzerbedienung zum Anweisen eines Starts der Kalibrierung enthält,
wobei die Parameterverwaltungseinheit (13) konfiguriert ist, wenn die Benutzerschnittstelle die Benutzerbedienung zum Anweisen des Starts der Kalibrierung empfängt, eine Kalibrierungskarte, erhalten durch Bilden einer Vielzahl von Patch-Bildern auf dem verwendeten Medium, an das Bilderzeugungsgerät (42) auszugeben; wobei die Parameterverwaltungseinheit (13) konfiguriert ist, ein Bilderzeugungsmedium mit den Farbreproduktionscharakteristika, die den Charakteristika der kolorimetrischen Werte am nächsten sind, die durch Messen der Farben der Kalibrierungskarte erhalten wurden, unter den Bilderzeugungsmedien auszuwählen, die in die Gruppe klassifiziert sind, von der bestimmt wurde, dass das verwendete Medium dazu gehört; und um den Farbtonkorrekturparameter zum Korrigieren einer Differenz in den Farbreproduktionscharakteristika zwischen dem ausgewählten Bilderzeugungsmedium und dem in der Medium-korrespondierenden Korrektureinheit verwendeten Medium zu erzeugen,
wobei der Farbumwandlungsparameter korrespondierend mit dem ausgewählten Bilderzeugungsmedium in der Farbumwandlungseinheit (6) eingestellt wird, der erzeugte Farbtonkorrekturparameter in der Medium-korrespondierenden Korrektureinheit eingestellt wird und eine Kombination des Farbumwandlungsparameters mit dem Farbtonkorrekturparameter in der Registrationsliste (35) in Assoziation mit dem aus den Spektralreflexionscharakteristika des verwendeten Mediums berechneten Merkmalsbetrag registriert wird.

2. Bildverarbeitungsgerät nach Anspruch 1, wobei
das Bilderzeugungsgerät (42) enthält

einen Medienbehälter, konfiguriert zum Enthalten von Bilderzeugungsmedien, und

einen Mediensensor, konfiguriert zum Detektieren einer Spektralreflexion von Bilderzeugungsmedien, die in dem Medienbehälter enthalten sind, und

wobei die Parameterverwaltungseinheit (13) konfiguriert ist, den Merkmalsbetrag des verwendeten Mediums aus der durch den Mediensensor detektierten Spektralreflexion zu extrahieren, während das verwendete Medium in dem Medienbehälter enthalten ist.

3. Bildverarbeitungsverfahren, ausgeführt in einem Bildverarbeitungsgerät, das Gleichförmigkeit von reproduzierten Farben in einem Bilderzeugungsgerät (42) erreicht, das durch Überlagern einer Vielzahl von Grundfarben übereinander Farbbilder auf einem Bilderzeugungsmedium erzeugt, und das eine Farbumwandlungseinheit (6) enthält, die Farbwerte in einem vorrichtungsabhängigen Farbraum, der RGB oder CMYK ist, einer anderen Vorrichtung, die von dem Bilderzeugungsgerät (42) verschieden ist, in Farbwerte in dem CMYK-Farbraum korrespondierend mit den Grundfarben des Bilderzeugungsgeräts (42) durch eine zwischenliegende Umwandlung in einen Austausch- Farbraum (PCS) basierend auf einem registrierten Farbumwandlungsparameter umwandelt, und außerdem eine Registrationsliste (35) enthält, in der eine Vielzahl von Farbumwandlungsparametern in Assoziation mit einer Vielzahl von Bilderzeugungsmedien mit verschiedenen Farbreproduktionscharakteristika für Umwandlung durch die Farbumwandlungseinheit (6) aus dem PSC in den CMYK-Farbraum registriert ist; das Bildverarbeitungsverfahren umfassend:

Klassifizieren der Vielzahl von Bilderzeugungsmedien, die in der Registrationsliste (35) registriert sind, in eine Vielzahl von Gruppen basierend auf einem Merkmalsbetrag, berechnet aus Spektralreflexionscharakteristika jedes Bilderzeugungsmediums, wobei der Merkmalsbetrag jeder der Bilderzeugungsmedien in der Registrationsliste (35) in Assoziation mit der Vielzahl von registrierten Bilderzeugungsmedien registriert ist,

Empfangen einer Benutzerbedienung zum Anweisen des Extrahierens eines Bilderzeugungsmediums, das imstande ist, Farbreproduktionscharakteristika eines Bilderzeugungsmediums, eingesetzt in dem Bilderzeugungsgerät (42) als ein verwendetes Medium, aus der Vielzahl von Bilderzeugungsmedien, die in der Registrationsliste (35) registriert sind, anzunähern;

Bestimmen, zu welcher der Vielzahl von Gruppen das verwendete Medium gehört, basierend auf dem Merkmalsbetrag des verwendeten Mediums;

Empfangen einer Benutzerbedienung zum Anweisen eines Starts der Kalibrierung, Ausgeben, als Reaktion auf die Benutzerbedienung zum Anweisen des Starts der Kalibrierung, einer Kalibrierungskarte, erhalten durch Bilden einer Vielzahl von Patch-Bildern auf dem verwendeten Medium;

Auswählen eines Bilderzeugungsmediums mit den Farbreproduktionscharakteristika, die den Charakteristika der kolorimetrischen Werte am nächsten sind, die durch Messen der Farben der Kalibrierungskarte erhalten wurden, unter der Vielzahl von Bilderzeugungsmedien in der Gruppe, von der bestimmt wird, dass das verwendet Medium dazu gehört;

Erzeugen eines Farbtonkorrekturparameters zum Korrigieren einer Differenz in den Farbreproduktionscharakteristika zwischen dem ausgewählten Bilderzeugungsmedium und dem verwendeten Medium;

Korrigieren von Farbtoncharakteristika jeder der Grundfarben des Bilderzeugungsgeräts (42) in Assoziation mit dem verwendeten Medium basierend auf dem Farbtonkorrekturparameter,

Registrieren einer Kombination des Farbumwandlungsparameters mit dem Farbtonkorrekturparameter in der Registrationsliste (35) in Assoziation mit einem Merkmalsbetrag, berechnet aus den Spektralreflexionscharakteristika des verwendeten Mediums; und

Präsentieren des extrahierten Bilderzeugungsmediums einem Benutzer.

4. Computerprogrammprodukt, umfassend ein nichtflüchtiges computerverwendbares Medium mit einem Bildverarbeitungsprogramm zum Bewirken, dass ein Bildverarbeitungsgerät ein Verfahren nach Anspruch 3 ausführt.

## Revendications

1. Appareil de traitement d'images qui met en oeuvre un traitement d'images en vue d'obtenir une uniformité de couleurs reproduites dans un appareil de formation d'images (42) qui forme des images couleur sur un support de formation d'images, en superposant mutuellement une pluralité de couleurs de base, l'appareil de traitement d'images comprenant :

une unité de conversion colorimétrique (6) configurée de manière à convertir des valeurs de couleurs, dans un espace colorimétrique dépendant du dispositif, à savoir RGB ou CMYK, d'un autre dispositif distinct de l'appareil de formation d'images (42), en des valeurs de couleurs dans l'espace colorimétrique CMYK correspondant aux couleurs de base de l'appareil de formation d'images (42), par le biais d'une conversion intermédiaire en un espace colorimétrique de référence, PCS, sur la base d'un paramètre de conversion colorimétrique enregistré ; une liste d'enregistrement (35) dans laquelle une pluralité de paramètres de conversion colorimétrique est enregistrée en association avec une pluralité de supports de formation d'images présentant différentes caractéristiques de reproduction de couleurs, à des fins de conversion, par l'unité de conversion colorimétrique (6), de l'espace PCS à l'espace colorimétrique CMYK ;

une unité de gestion de paramètres (13) qui inclut une fonction destinée à extraire, sur la base d'une quantité de caractéristiques calculée à partir de caractéristiques de réflectance spectrale d'un support de formation d'images, défini dans l'appareil de formation d'images comme étant un support utilisé, un support de formation d'images apte à approximer des caractéristiques de reproduction de couleurs du support utilisé, parmi la pluralité de supports de formation d'images enregistrée dans la liste d'enregistrement (35) ;

dans lequel la quantité de caractéristiques de chacun des supports de formation d'images est enregistrée dans la liste d'enregistrement (35) en association avec la pluralité de supports de formation d'images enregistrée, l'unité de gestion de paramètres étant configurée de manière à classer la pluralité de supports de formation d'images enregistrée dans la liste d'enregistrement (35) dans une pluralité de groupes, sur la base de la quantité de caractéristiques de chaque support de formation d'images, et à déterminer à quel groupe de la pluralité de groupes appartient le support utilisé, sur la base de la quantité de caractéristiques du support utilisé ;

l'appareil comprenant en outre une interface utilisateur configurée de manière à recevoir une opération d'utilisateur visant à ordonner, à l'unité de gestion de paramètres (13), d'extraire un support de formation d'images apte à approximer les caractéristiques de reproduction de couleurs du support utilisé, et à présenter le support de formation d'images extrait par l'unité de gestion de paramètres (13) à l'utilisateur ; et

une unité de correction correspondant au support configurée de manière à corriger des caractéristiques de tonalité de chacune des couleurs de base de l'appareil de formation d'images (42) en association avec le support utilisé, sur la base d'un paramètre de correction de tonalité ;

dans lequel l'interface utilisateur inclut une fonction destinée à recevoir une opération d'utilisateur visant à ordonner un début d'étalonnage ;

l'unité de gestion de paramètres (13) étant configurée de manière à générer en sortie, lorsque l'interface utilisateur reçoit l'opération d'utilisateur visant à ordonner le début d'étalonnage, un tableau d'étalonnage obtenu en formant une pluralité d'images de correction sur le support utilisé, vers l'appareil de formation d'images (42) ;

dans lequel l'unité de gestion de paramètres (13) est configurée de manière à sélectionner un support de formation d'images présentant des caractéristiques de reproduction de couleurs les plus proches des caractéristiques des valeurs colorimétriques obtenues en mesurant les couleurs du tableau d'étalonnage, parmi les supports de formation d'images classés dans le groupe auquel il est déterminé que le support utilisé appartient ; et à générer le paramètre de correction de tonalité en vue de corriger une différence, en termes de caractéristiques de reproduction de couleurs, entre le support de formation d'images sélectionné et le support utilisé dans l'unité de correction correspondant au support;

dans lequel le paramètre de conversion colorimétrique correspondant au support de formation d'images sélectionné est défini dans l'unité de conversion colorimétrique (6), le paramètre de correction de tonalité généré est défini dans l'unité de correction correspondant au support, et une combinaison du paramètre de conversion colorimétrique avec le paramètre de correction de tonalité est enregistrée dans la liste d'enregistrement (35) en association avec la quantité de caractéristiques calculée à partir des caractéristiques de réflectance spectrale du support utilisé.

2. Appareil de traitement d'images selon la revendication 1, dans lequel l'appareil de formation d'images (42) inclut :

un conteneur de supports configuré de manière à contenir des supports de formation d'images ; et un capteur de support configuré de manière à détecter une réflectance spectrale de supports de formation d'images contenus dans le conteneur de supports ; et l'unité de gestion de paramètres (13) est configurée de manière à extraire la quantité de caractéristiques du support utilisé de la réflectance spectrale détectée par le capteur de support tandis que le support utilisé est contenu dans le conteneur de supports.

3. Procédé de traitement d'images exécuté dans un appareil de traitement d'images qui obtient une uniformité de couleurs reproduites dans un appareil de formation d'images (42) qui forme des images couleur sur un support de formation d'images en superposant mutuellement une pluralité de couleurs de base, et qui inclut une unité de conversion colorimétrique (6) qui convertit des valeurs de couleurs, dans un espace colorimétrique dépendant du dispositif, à savoir RGB ou CMYK, d'un autre dispositif distinct de l'appareil de formation d'images (42), en des valeurs de couleurs dans l'espace colorimétrique CMYK correspondant aux couleurs de base de l'appareil de formation d'images (42), par le biais d'une conversion intermédiaire en un espace colorimétrique de référence, PCS, sur la base d'un paramètre de conversion colorimétrique enregistré, et qui inclut également une liste d'enregistrement (35) dans laquelle une pluralité de paramètres de conversion colorimétrique est enregistrée en association avec une pluralité de supports de formation d'images présentant différentes caractéristiques de reproduction de couleurs, à des fins de conversion, par l'unité de conversion colorimétrique (6), de l'espace PCS à l'espace colorimétrique CMYK ; le procédé de traitement d'images comportant les étapes ci-dessous consistant à :

classer la pluralité de supports de formation d'images enregistrés dans la liste d'enregistrement (35) dans une pluralité de groupes, sur la base d'une quantité de caractéristiques calculée à partir de caractéristiques de réflectance spectrale de chaque support de formation d'images, dans lequel la quantité de caractéristiques de chacun des supports de formation d'images est enregistrée dans la liste d'enregistrement (35) en association avec la pluralité de supports de formation d'images enregistrée ;

recevoir une opération d'utilisateur visant à ordonner l'extraction d'un support de formation d'images apte à approximer des caractéristiques de reproduction de couleurs d'un support de formation d'images, défini dans l'appareil de formation d'images (42) comme étant un support utilisé, parmi la pluralité de supports de formation d'images enregistrée dans la liste d'enregistrement (35) ;

déterminer à quel groupe de la pluralité de groupes appartient le support utilisé, sur la base de la quantité de caractéristiques du support utilisé ;

recevoir une opération d'utilisateur visant à ordonner un début d'étalonnage ;

générer en sortie, en réponse à l'opération d'utilisateur visant à ordonner le début d'étalonnage, un tableau d'étalonnage obtenu en formant une pluralité d'images de correction sur le support utilisé ;

sélectionner un support de formation d'images présentant les caractéristiques de reproduction de couleurs les plus proches de caractéristiques de valeurs colorimétriques obtenues en mesurant des couleurs du tableau d'étalonnage, parmi la pluralité de supports de formation d'images dans le groupe auquel il est déterminé que le support utilisé appartient ;

générer un paramètre de correction de tonalité en vue de corriger une différence, en termes de caractéristiques de reproduction de couleurs, entre le support de formation d'images sélectionné et le support utilisé ;

corriger des caractéristiques de tonalité de chacune des couleurs de base de l'appareil de formation d'images (42) en association avec le support utilisé, sur la base du paramètre de correction de tonalité ;

enregistrer une combinaison du paramètre de conversion colorimétrique avec le paramètre de correction de tonalité dans la liste d'enregistrement (35) en association avec une quantité de caractéristiques calculée à partir des caractéristiques de réflectance spectrale du support utilisé ; et

présenter le support de formation d'images extrait à l'utilisateur.

4. Produit-programme informatique comprenant un support non transitoire utilisable par ordinateur présentant un programme de traitement d'images destiné à amener un appareil de traitement d'images à exécuter un procédé selon la revendication 3.

# FIG.1

# FIG.2

# FIG.3

EP 2 487 893 B1

# FIG.4

PAPER REGISTRATION
LIST
35

PAPER PROFILE DB
15

| id | Name | Score Value | TRC | Prof. Id | | id | Profile |
|---|---|---|---|---|---|---|---|
| 0 | Unset | 0, 0, 0 | TRC0 | 0 | | 0 | Unset |
| 1 | Plain Paper (Standard) | -12, -13, 3 | TRC1 | 1 | | 1 | Standard 1 |
| 2 | Plain Paper (High degree of white) | -17, 30, 3 | TRC2 | 2 | | 2 | Standard 2 |
| 3 | Standard Art | 17, -11, -3 | TRC3 | 3 | | 3 | Standard 3 |
| ⋮ | ⋮ | ⋮ | ⋮ | ⋮ | | ⋮ | ⋮ |
| 16 | User Matte 1 | -34, -5, 0 | TRC16 | 1 | | 16 | User 1 |
| 17 | User Gloss 1 | 17, -5, 0 | TRC17 | 16 | | 17 | User 2 |
| ⋮ | ⋮ | ⋮ | ⋮ | ⋮ | | ⋮ | ⋮ |
| | | | | | | | |

36

37

# FIG.5

**20**

**Color Management Settings**

Paper Profile Settings     21

| Automatic Selection by Calibration | ▽ |

▭ Estimate Set Paper
33

22— | Execute Calibration |

Simulation Profile Settings

RGB: | sRGB IEC61966-2.1 | ▽ |~23

CMYK: | Japan Color 2001 Coated | ▽ |~24

32—☑ Priority to Embedded Profile

25     26
| Set | | Cancel |

**27**     **28**

**Automatic Selection by Calibration**

User Matte 1
User Gloss 1
User Matte 2
User Gloss 2     29
User Gloss 3
User Plain Paper
...

New/Edit... —30
Delete... —31

# FIG.6

**79**

**New Registration**

User Matte 1
User Gloss 1
User Matte 2
User Gloss 2     29
User Gloss 3
User Plain Paper
...

**70**

**Paper Profile Settings**

    71

Name: | User Matte 2 | ▽ |

Priority Image | Tone Priority (Default) | ▽ |~72
Quality Mode:

Base Profile: | Automatic Selection | ▽ |~73

22— | Execute Calibration |

77     78
| Set | | Cancel |

**Tone Priority** —80

**Resolution Priority**

**Automatic Selection** —81

Standard 1
Standard 2
Standard 3
User 1
User 2
...

# FIG.7

COLOR MANAGEMENT SETTINGS

S101 SAVE ALL SET VALUES

①'

S102 HAS SET-PAPER ESTIMATION BUTTON BEEN PRESSED? — YES → S103 PAPER ESTIMATION PROCESS

S104 CHANGE DISPLAY OF PULL-DOWN MENU FOR SELECTION OF PAPER PROFILE AND SELECTION VALUES

NO

S105 HAS PULL-DOWN MENU FOR SELECTION OF PAPER PROFILE BEEN PRESSED? — YES → S106 SELECT PAPER PROFILE

S107 CHANGE DISPLAY OF PULL-DOWN MENU FOR SELECTION OF PAPER PROFILE AND SELECTION VALUES

NO

S108 HAS CALIBRATION EXECUTION BUTTON BEEN PRESSED? — YES → S109 CALIBRATION PROCESS

S110 HAS PAPER PROFILE BEEN CHANGED? — NO

YES

S111 CHANGE DISPLAY OF PULL-DOWN MENU FOR SELECTION OF PAPER PROFILE AND SELECTION VALUES

②

②

S112 HAS PULL-DOWN MENU FOR SELECTION OF RGB PROFILE BEEN PRESSED? — YES → S113 SELECT RGB PROFILE

S114 CHANGE DISPLAY OF PULL-DOWN MENU FOR SELECTION OF RGB PROFILE AND SELECTION VALUES

NO

S115 HAS PULL-DOWN MENU FOR SELECTION OF CMYK PROFILE BEEN PRESSED? — YES → S116 SELECT CMYK PROFILE

S117 CHANGE DISPLAY OF PULL-DOWN MENU FOR SELECTION OF CMYK PROFILE AND SELECTION VALUES

NO

S118 HAS CHECK BOX FOR INDICATING PRIORITY TO EMBEDDED PROFILE BEEN PRESSED? — YES → S119 INVERT ON/OFF OF CHECKING

NO

S120 HAS CANCEL BUTTON BEEN PRESSED? — YES → S121 RETURN ALL SET VALUES SAVED

NO

S122 HAS SET BUTTON BEEN PRESSED? — YES →

NO

①

END

EP 2 487 893 B1

# FIG.8

```
┌─────────────────────────┐
│  PAPER ESTIMATION       │
│      PROCESS            │
└─────────────────────────┘
            │
            ▼
┌─────────────────────────────────┐
│ ACQUIRE SPECTRAL REFLECTANCE OF │ ～S201
│ USER'S PAPER SHEET ON SELECTED  │
│    PAPER FEED STACKER           │
└─────────────────────────────────┘
            │
            ▼
┌─────────────────────────────────┐
│ CALCULATE SCORE VALUES OF USER'S│ ～S202
│        PAPER SHEET              │
└─────────────────────────────────┘
            │
            ▼
┌─────────────────────────────────┐
│ EXTRACT REGISTERED PAPER CLOSE  │ ～S203
│   TO MAIN COMPONENT SCORE       │
└─────────────────────────────────┘
            │
            ▼
          S204
        ◇ HAS AT
  LEAST ONE REGISTERED PAPER ◇ ──── YES
     BEEN EXTRACTED?
            │ NO
            ▼
┌─────────────────────────────────┐
│       DISPLAY MESSAGE           │ ～S205
└─────────────────────────────────┘
            │
            ▼
┌─────────────────────────────────┐
│ SET DEFAULT VALUE ("Automatic   │ ～S206
│ Selection by Calibration") IN   │
│ PAPER SELECTION MENU            │
└─────────────────────────────────┘
            │
            ▼
         ┌──────┐
         │ END  │
         └──────┘
```

# FIG.9

# FIG.10

# FIG.11

# FIG.12

```
        ( CALIBRATION PROCESS )
                  │
                  ▼
  ┌──────────────────────────────┐
  │ OUTPUT CALIBRATION CHART,     │  ~S301
  │ AND ACQUIRE RESULT OF         │
  │ COLOR MEASUREMENT             │
  └──────────────────────────────┘
                  │
                  ▼
           ◇ S302
   IS "Automatic Selection by ──── YES ──────────────────────────┐
        Calibration" SET?                                        │
                  │                                              ▼
                  │ NO                         ┌──────────────────────────────┐
                  ▼  S310                       │  DETERMINE PAPER TYPE  │ S303
  ┌──────────────────────────────┐             └──────────────────────────────┘
  │ CALCULATE NEW PAPER           │                            │
  │ CORRECTION TRC (TRC_new) AND   │                            ▼  S304
  │ ERROR EVALUATION VALUE         │             ┌──────────────────────────────┐
  │ (E_new) FOR SELECTED BASE      │             │ CALCULATE OPTIMAL BASE        │
  │ PROFILE (BP_i)                 │             │ PROFILE (BP_new), PAPER       │
  └──────────────────────────────┘             │ CORRECTION TRC (TRC_new), AND  │
                  │                              │ ERROR EVALUATION VALUE        │
                  ▼  S311                         │ (E_new)                       │
  ┌──────────────────────────────┐             └──────────────────────────────┘
  │ CALCULATE ERROR               │                            │
  │ EVALUATION VALUE (E_i) FOR     │                            ▼  S305
  │ SETTING OF SELECTED           │             ┌──────────────────────────────┐
  │ REGISTRATION PAPERS           │             │ CALCULATE i MINIMIZING ERROR  │
  │ (BP_i, TRC_i)                  │             │ EVALUATION VALUE (E_i) FROM    │
  └──────────────────────────────┘             │ SETTING OF REGISTERED         │
                  │                              │ PAPERS (BP_i, TRC_i)           │
                  ▼  S312                         └──────────────────────────────┘
          ◇ E_new < E_i? ──── NO ──┐                         │
                  │ YES            │              ▼  S306
                  ▼  S313          │   NO ── ◇ E_new < E_i?
       ◇ IS TRC_new UPDATED? ─ NO ─┤                         │ YES
                  │ YES       NO   │              ▼  S307
                  ▼  S314          ◄── ◇ ARE (BP_new, TRC_new) NEWLY
  ┌──────────────────────────────┐         REGISTERED?
  │ TRC_i ← TRC_new               │                │ YES
  └──────────────────────────────┘                ▼  S308
                  │               ┌──────────────────────────────┐
                  ▼  S315          │ SET (BP_new, TRC_new) AS SET  │
  ┌──────────────────────────────┐│ VALUES                        │
  │ SET (BP_i, TRC_i) AS SET VALUES│└──────────────────────────────┘
  └──────────────────────────────┘              │
                  │                              ▼  S309
                  │               ┌──────────────────────────────┐
                  │               │ ADD (BP_new, TRC_new) TO PAPER │
                  │               │ REGISTRATION LIST TOGETHER    │
                  │               │ WITH PAPER MAIN COMPONENT     │
                  │               │ SCORE                         │
                  │               └──────────────────────────────┘
                  ▼                              │
               ( END ) ◄────────────────────────┘
```

# FIG.13

**EP 2 487 893 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008153810 A
- JP 2008 A
- JP 153810 A
- JP 2002084433 A